# EUROPEAN PATENT APPLICATION

(11) **EP 4 513 770 A1**
(43) Date of publication of application: **26.02.2025**
(21) Application number: 22937721.3
(22) Date of filing: 18.04.2022
(51) Int. Cl.: H04B 5/00, G06K 7/10

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); ZUO, Zhisong, Dongguan, Guangdong 523860 (CN); HE, Chuanfeng, Dongguan, Guangdong 523860 (CN); ZHANG, Zhi, Dongguan, Guangdong 523860 (CN)
(74) Representative: RGTH
(86) International application number: PCT/CN2022/087474
(87) International publication number: WO 2023/201481

(57) **Abstract**

A communication method and a communications apparatus are provided, including: measuring, by a first terminal device, a first uplink signal to obtain a first measurement result; and transmitting, by the first terminal device according to the first measurement result, a backscatter signal to a network device based on a second uplink signal, where the first uplink signal is transmitted by a second terminal device. According to a method in embodiments of this application, backscatter communication based on an uplink signal can be implemented.

## Description

### TECHNICAL FIELD

This application relates to the field of communications technologies, and more specifically, to a communication method and a communications apparatus.

### BACKGROUND

In recent years, application of zero-power devices has become increasingly wide. A zero-power terminal device may perform communication based on a backscatter communication (back scattering) technology. For example, the zero-power terminal device may perform backscatter communication by means of a signal (such as an uplink signal, a downlink signal, or a dedicated carrier signal) used for backscatter communication. However, there is no good solution to how to perform the backscatter communication based on the uplink signal.

### SUMMARY

This application provides a communication method and a communications apparatus, so that backscatter communication can be implemented based on an uplink signal.

According to a first aspect, a communication method is provided that includes: measuring, by a first terminal device, a first uplink signal to obtain a first measurement result; and transmitting, by the first terminal device according to the first measurement result, a backscatter signal to a network device based on a second uplink signal, where the first uplink signal is transmitted by a second terminal device.

According to a second aspect, a communication method is provided that includes: receiving, by a network device, a backscatter signal transmitted by a first terminal device based on a second uplink signal, where the backscatter signal is transmitted by the first terminal device according to a first measurement result, and the first measurement result is obtained through performing, by the first terminal device, a measurement of a first uplink signal transmitted by a second terminal device.

According to a third aspect, a communications apparatus is provided that includes: a measurement unit, configured to measure a first uplink signal to obtain a first measurement result; and a transmitting unit, configured to transmit, according to the first measurement result, a backscatter signal to a network device based on a second uplink signal, where the first uplink signal is transmitted by a second terminal device.

According to a fourth aspect, a communications apparatus is provided that includes: a receiving unit, configured to receive a backscatter signal transmitted by a first terminal device based on a second uplink signal, where the backscatter signal is transmitted by the first terminal device according to a first measurement result, and the first measurement result is obtained through performing, by the first terminal device, a measurement of a first uplink signal transmitted by a second terminal device.

According to a fifth aspect, a communications apparatus is provided that includes a memory, a transceiver, and a processor, where the memory is configured to store a program, the processor performs data transmission and reception by using the transceiver, and the processor is configured to invoke the program in the memory to execute the method according to the first aspect.

According to a sixth aspect, a communications apparatus is provided that includes a memory, a transceiver, and a processor, where the memory is configured to store a program, the processor performs data transmission and reception by using the transceiver, and the processor is configured to invoke the program in the memory to execute the method according to the second aspect.

According to a seventh aspect, a communications apparatus is provided that includes a processor, configured to invoke a program from a memory to execute the method according to the first aspect.

According to an eighth aspect, a communications apparatus is provided that includes a processor, configured to invoke a program from a memory to execute the method according to the second aspect.

According to a ninth aspect, a chip is provided that includes a processor, configured to invoke a program from a memory, to cause a device on which the chip is installed to perform the method according to the first aspect.

According to a tenth aspect, a chip is provided that includes a processor, configured to invoke a program from a memory, to cause a device on which the chip is installed to perform the method according to the second aspect.

According to an eleventh aspect, a computer-readable storage medium is provided, where the computer-readable storage medium stores a program thereon, and the program causes a computer to execute the method according to the first aspect.

According to a twelfth aspect, a computer-readable storage medium is provided, where the computer-readable storage medium stores a program thereon, and the program causes a computer to execute the method according to the second aspect.

According to a thirteenth aspect, a computer program product is provided, including a program, where the program causes a computer to execute the method according to the first aspect.

According to a fourteenth aspect, a computer program product is provided, including a program, where the program causes a computer to execute the method according to the second aspect.

According to a fifteenth aspect, a computer program is provided, where the computer program causes a computer to execute the method according to the first aspect.

According to a sixteenth aspect, a computer program is provided, where the computer program causes a computer to execute the method according to the second aspect.

In embodiments of this application, a first terminal device measures a first uplink signal transmitted by a second terminal device to obtain a first measurement result, and determines, based on the first measurement result, a second uplink signal that can be used for backscatter communication, so that backscatter communication can be performed based on the second uplink signal.

In addition, a terminal device (such as a zero-power terminal device) capable of performing backscatter communication generally has characteristics such as low power consumption and low costs. Through implementation of the backscatter communication based on an uplink signal, such terminal device is facilitated to be further applied to a communications system, thereby reducing costs and power consumption of the terminal devices.

### BRIEF DESCRIPTION OF DRAWINGS

FIG. 1 is a schematic diagram of a wireless communications system according to an embodiment of this application.
FIG. 2 is a schematic diagram of a zero-power communications system according to an embodiment of this application.
FIG. 3 is a schematic structural diagram of an energy harvesting module according to an embodiment of this application.
FIG. 4 is a schematic diagram of a backscatter communication principle according to an embodiment of this application.
FIG. 5 is a circuit diagram of a terminal device based on a resistive load modulation technology according to an embodiment of this application.
FIG. 6 is a schematic diagram of a wireless communications system according to an embodiment of this application.
FIG. 7 is a schematic flowchart of a communication method according to an embodiment of this application.
FIG. 8 is a schematic diagram of a time window according to an embodiment of this application.
FIG. 9 is a schematic flowchart of a communication method according to an embodiment of this application.
FIG. 10 is a schematic flowchart of a communication method according to another embodiment of this application.
FIG. 11 is a schematic flowchart of a communication method according to yet another embodiment of this application.
FIG. 12 is a schematic structural diagram of a communications apparatus according to an embodiment of this application.
FIG. 13 is a schematic structural diagram of a communications apparatus according to another embodiment of this application.
FIG. 14 is a schematic structural diagram of an apparatus according to an embodiment of this application.

### DESCRIPTION OF EMBODIMENTS

The technical solutions in this application are described below with reference to the accompanying drawings.

With the development of wireless communications technologies, it is expected to integrate a wireless communications system with various vertical industries such as logistics, manufacturing, transportation, and energy. For example, the wireless communications system may be integrated with an industrial wireless sensor network (industrial wireless sensor network, IWSN). For another example, a wireless communications system may be integrated with a smart logistics and smart warehousing. For another example, a wireless communications system may be integrated with an intelligent home network.

However, in these industries, a terminal device is generally required to have characteristics such as a relatively low cost, a relatively small size (such as an ultra-thin size), maintenance-free, and long life. Therefore, to meet the foregoing condition, communication may be performed between a network device and a terminal device by using a zero-power communication technology. In this case, the terminal device may also be referred to as a "zero-power terminal device" or "zero-power device".

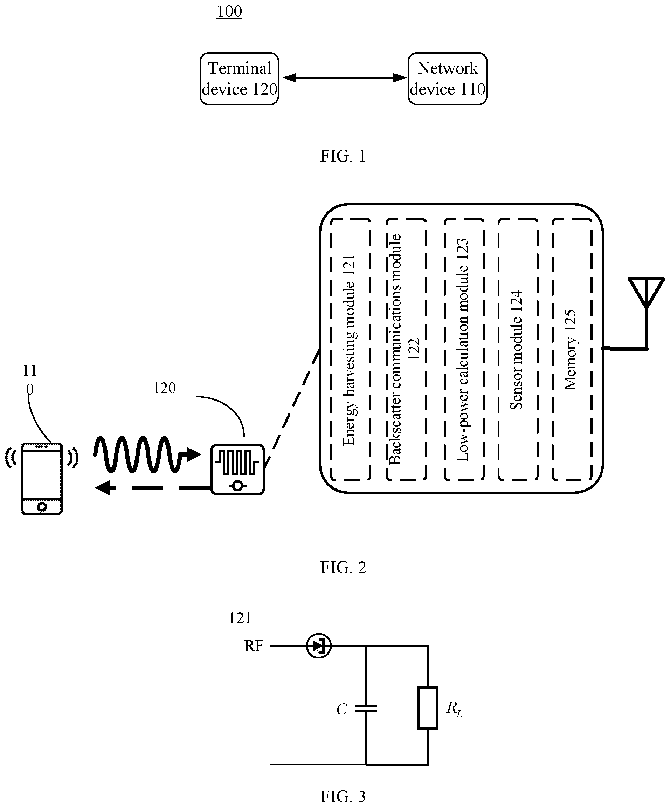

The following describes the zero-power communication technology and the zero-power terminal device with reference to FIG. 1 to FIG. 5. FIG. 1 shows an architecture of a zero-power communications system 100 to which an embodiment of this application is applied. The architecture shown in FIG. 1 includes a network device 110 and a terminal device 120. The network device 110 may be a device that communicates with the terminal device 120. The network device 110 may provide communication coverage for a specific geographical area, and may communicate with the terminal device 120 located in the coverage area.

The network device 110 and the terminal device 120 may communicate based on a backscatter (back scattering) communication technology. In the backscatter communication technology, a signal used for backscatter communication is extremely important. The signal used for backscatter communication is a radio signal, such as a radio frequency signal. The signal used for backscatter communication may include, for example, an energy supply signal, a carrier signal, and the like. In some embodiments, the network device 110 may transmit an energy supply signal to the terminal device 120 to supply energy to the terminal device. In some other embodiments, the terminal device 120 may transmit data to the network device 110 by using a carrier signal. In some implementations, the energy supply signal may further carry data or control information transmitted by the network device 110 to the terminal device 120. Certainly, the energy supply signal may be used only for energy supply, which is not limited in embodiments of this application.

It should be noted that FIG. 1 exemplarily shows one network device and one terminal device. Optionally, the communications system 100 may include a plurality of network devices, and another quantity of terminal devices may be included within coverage of each network device, which is not limited in embodiments of this application.

In addition, in some implementations, the communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) system or new radio (new radio, NR), a long term evolution (long term evolution, LTE) system, an LTE frequency division duplex (frequency division duplex, FDD) system, LTE time division duplex (time division duplex, TDD), and a cellular Internet of Things. The technical solutions provided in this application may further be applied to future communications systems, such as a sixth-generation mobile communications system. The technical solutions provided in this application may further be applied to another communications system, for example, a wireless fidelity (wireless fidelity, Wi-Fi) system, a vehicle-to-everything (vehicle to everything, V2X) system, an internet of things (the internet of things, IoT) system, or a local area network.

The terminal device in embodiments of this application may also be referred to as a user equipment (user equipment, UE), an access terminal, a subscriber unit, a subscriber station, a mobile, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device, a vehicle-mounted device, a household appliance, a sensor, and an electronic tag having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. All terminal devices in embodiments of this application may be zero-power terminals, or may be terminal devices that may support backscatter communication.

The network device in embodiments of this application may be a device used to communicate with a terminal device. If the terminal device is an electronic tag, the network device may be a reader/writer (for example, a reader/writer based on a radio frequency identification (radio frequency identification, RFID) technology) that is configured to read or write the electronic tag. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device (device-to-device, D2D), vehicle-to-everything (vehicle-to-everything, V2X), and machine-to-machine (machine-to-machine, M2M) communication, a network-side device in a 6G network, a device that functions as a base station in a future communications system, or the like. The base station may support networks of the same or different access technologies. A specific technology and a specific device form used by the network device are not limited in embodiments of this application.

The base station may be a fixed station or a mobile station. For example, a helicopter or an unmanned aerial vehicle may be configured to function as a mobile base station, and one or more cells may move depending on a location of the mobile base station. In other examples, a helicopter or an unmanned aerial vehicle may be configured to serve as a device in communication with another base station.

In some deployments, the network device in embodiments of this application may refer to a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario where the network device and the terminal device are located is not limited.

It should be understood that all or some of functions of the communications device in this application may also be implemented by software functions running on hardware, or by virtualization functions instantiated on a platform (for example, a cloud platform).

For ease of understanding of the zero-power communication technology, the following describes a terminal device that supports the zero-power communication technology with reference to FIG. 2.

Generally, the terminal device 120 may include an energy harvesting module 121 and a backscatter communications module 122. The energy harvesting module 121 and the backscatter communications module 122 are to be described below with reference to FIG. 3 to FIG. 5, and thus the details thereof are not described here for brevity. In some cases, the terminal device 120 may further include a low-power calculation module 123. The low-power calculation module 123 is configured to provide a calculation function, such as data processing, for the terminal device 120. In some other cases, the terminal device 120 may further include a sensor 124, configured to collect external information (for example, ambient temperature, and ambient humidity). In some other cases, the terminal device 120 may further include a memory 125, configured to store some information (for example, the external information collected by the foregoing sensor, or for example, an article identity).

The energy harvesting module 121 is configured to harvest energy. In some implementations, energy may be harvested by using an energy supply signal transmitted by the network device. The energy supply signal may be a "radio frequency signal" transmitted by the network device. Therefore, the energy harvesting module is also referred to as a "radio frequency energy harvesting module".

FIG. 3 shows a possible structure of an energy harvesting module. As shown in FIG. 3, the energy harvesting module 121 may harvest energy of a spatial electromagnetic wave of a radio frequency signal based on an electromagnetic induction principle, and store harvested energy in a capacitor C. This is a charging process of the capacitor C. After the charging process of the capacitor C ends, the capacitor C may start to discharge to supply energy to the terminal device for operation. For example, the discharging of the capacitor C may be used to drive the terminal device to perform low power demodulation on data transmitted by the network device. For another example, the discharging of the capacitor C may be used to drive a terminal to perform modulation on data to be transmitted. For another example, the discharging of the capacitor C may be used to drive a sensor of the terminal device to collect data. For another example, the discharging of the capacitor C may be used to drive the terminal device to read data in the memory 125, or the like.

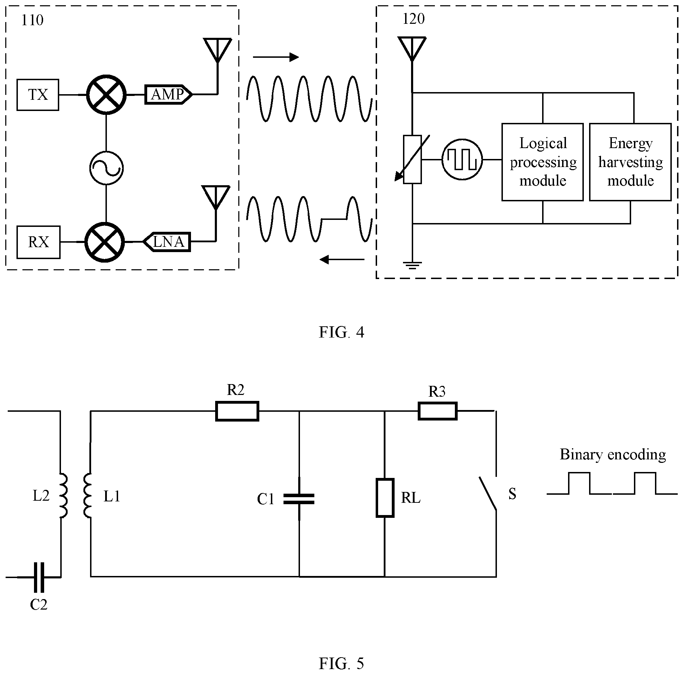

The backscatter communications module 122 is configured for the terminal device 120 to perform backscatter communication with the network device 110. A backscatter communication principle according to an embodiment of this application is described below with reference to FIG. 4. Referring to FIG. 4, the terminal device 120 receives a radio signal transmitted by the network device 110, and modulates the radio signal to load data that needs to be transmitted. Finally, the modulated signal is radiated from an antenna. This information transmission process is referred to as backscatter communication. The radio signal may also be referred to as a carrier signal. The carrier signal may be a radio signal that is not modulated. The carrier signal may be, for example, a sine wave signal. The backscatter communication is inseparable from a load modulation function. The load modulation function may be understood as a process that a circuit parameter of an oscillation loop of the terminal device is adjusted and controlled according to a beat of a data stream, such that parameters such as magnitude of impedance of the terminal device change accordingly, thereby completing modulation.

In some implementations, another component, for example, an amplifier (amplifier, AMP), may further be provided on a transport (transport, TX) path of the network device 110, and may be configured to process a signal to be transmitted. Another component, for example, a low noise amplifier (low noise amplifier, LNA), may further be disposed on a receive (receive, RX) path of the network device 110, so as to process a received signal.

In some other implementations, the terminal device 120 may include an energy harvesting module, and the energy harvesting module may be configured to collect any signal in an environment. For example, the energy harvesting module may be configured to harvest energy of an energy supply signal transmitted by a network device. A form of the energy supply signal is not specifically limited in this embodiment of this application. For example, the energy supply signal may be a modulated radio signal, or may be an unmodulated radio signal. The carrier signal as described above may also be used as the energy supply signal. For another example, the power supply signal may also be a radio signal of any waveform, such as a sine wave or a square wave.

Certainly, a logic processing module may be further disposed in the terminal device 120, to execute a corresponding calculation function.

It should be noted that, for either the network device 110 or the terminal device 120, FIG. 4 only shows exemplarily a connection structure of a signal processing circuit, and processing circuits of the network device 110 and/or the terminal device 120 may include other elements. This is not specifically limited in embodiments of this application.

Generally, the load modulation function may be implemented in two manners: resistive load modulation and capacitive load modulation. FIG. 5 shows a circuit diagram of a terminal device based on a resistive load modulation technology. It should be noted that the manner in which the circuit in FIG. 5 implements the load modulation technology is similar to a manner in which an existing circuit implements the load modulation technology. For brevity, functions of resistors R2 and R3, capacitors C1 and C2, and inductors L1 and L2 included in the circuit in FIG. 5 are not described again.

In resistive load modulation, a resistor RL may be connected in parallel to the load. The switch S may implement on/off of the resistor RL under the control of a binary data stream. In this way, on/off of the resistor RL causes a change in a voltage of the circuit, and the change in the voltage of the circuit may control an amplitude of a backscatter signal from the terminal device, so as to implement modulation of the backscatter signal, that is, amplitude-shift keying (amplitude-shift keying, ASK) modulation of the backscatter signal.

Similarly, in capacitive load modulation, on/off of a capacitor may be controlled based on a binary data stream, to change a resonance frequency of the circuit, thereby changing an operating frequency of the backscatter signal. In this way, frequency-shift keying (frequency-shift keying, FSK) modulation is implemented.

As described above, the terminal device may perform information modulation on a received signal (namely, a carrier signal) in a manner of load modulation, to implement a backscatter communication process. Therefore, a terminal device in backscatter communication generally has the following advantages.

Advantage 1: Since the terminal device does not need to proactively transmit a signal, a complex radio frequency path does not need to be constructed. For example, components such as a power amplifier (power amplifier, PA) and a radio frequency filter may not be provided in the radio frequency path, so as to reduce costs and a volume of the terminal.

Advantage 2: Since the terminal device does not need to proactively generate a high-frequency signal, there is no need for a high-frequency crystal oscillator, so that costs and a volume of the terminal device are reduced.

Advantage 3: Since the terminal device may communicate with the network device by using the backscatter technology, less energy is consumed by the terminal device during communication, or even no energy of the terminal device needs to be consumed.

In addition to the backscatter communication, energy harvesting, and load modulation function described above, the terminal device may further have a coding function. Data transmitted by an encoding end (for example, a terminal device or an electronic tag) may be represented as binary "1" and "0" by using different forms of code. In a zero-power communications system, commonly used coding manners may include non-return-to-zero inverted (NRZ) encoding, Manchester (Manchester) encoding, unipolar return-to-zero (Unipolar RZ) encoding, differential bi-phase (DBP) encoding, Miller (Miller) encoding, differential encoding, and the like. Generally speaking, an encoding process is to represent 0 and 1 by using different pulse signals.

Based on the foregoing introduction to the zero-power communication technology, it may be learned that a terminal device in zero-power communication (also referred to as a "zero-power terminal device") consumes little energy of the terminal device for communication, and may even not consume energy of the terminal device. Therefore, in the zero-power communication technology, terminal devices may be classified, based on an energy source and an energy usage manner of the terminal devices, into three types: a passive zero-power terminal, a semi-passive zero-power terminal, and an active zero-power terminal.

### 1 Passive zero-power terminal

A battery usually does not need to be installed in the passive zero-power terminal. When a terminal device is close to a network device, the terminal device is within a near field range formed through antenna radiation of the network device. In this case, an antenna of the terminal device may generate an induced current through electromagnetic induction, and the induced current may supply power to the terminal device, so as to implement demodulation of a received signal, and/or modulation and encoding of a signal to be transmitted, and the like. In some implementations, the passive zero-power terminal may be an electronic tag. Accordingly, the network device may be a reader/writer of a radio frequency identification (radio frequency identification, RFID) system for reading and/or changing content in the electronic tag.

### II. Semi-passive zero-power terminal

No conventional battery is installed in the semi-passive zero-power terminal itself, but radio wave energy may be harvested by using the energy harvesting module 121, and the harvested energy may be stored in an energy storage unit (such as a capacitor). After obtaining the energy, the energy storage unit may supply energy to the terminal device, so as to implement demodulation of a received signal, and/or modulation and encoding of a signal to be transmitted, and the like.

### III. Active zero-power terminal

The active zero-power terminal may have a built-in battery. The battery may supply energy to the terminal device, so as to implement demodulation of a received signal, and/or modulation and encoding of a signal to be transmitted, and the like. However, when the terminal device performs communication by using a backscatter technology, the terminal device does not need to consume energy of the battery. Therefore, for such a terminal device, "zero power" is mainly reflected in a scenario in which the terminal device performs communication by using the backscatter technology.

In some implementations, the active zero-power terminal may be an electronic tag, and the network device may be an RFID reader/writer. In this case, the built-in battery may supply power to an RFID chip in the terminal device, so as to increase a read/write distance between the RFID reader/writer and the electronic tag. In another aspect, the built-in battery may supply power to the RFID chip in the terminal device, so as to shorten a read/write delay of the RFID reader/writer on the electronic tag, thereby improving communication reliability.

The zero-power terminal device in this embodiment of this application has features such as low complexity, supporting environment power supply, backscatter, and a new waveform. A name of a zero-power terminal in this embodiment of this application does not limit a source and a usage manner of energy of the zero-power terminal, provided that energy required for operating of the zero-power terminal mainly comes from an external environment. In this case, the terminal device may be a zero-power device or a low power device. In some embodiments, the zero-power terminal may also be referred to as an environment energy-supplying terminal, an energy-harvesting-based terminal, or the like.

With rapid development of communication technologies, there are more and more types of and application scenarios for terminal devices, and higher requirements are also imposed on prices and power consumption of the terminal devices. In some communications systems, a zero-power terminal may be introduced to reduce power consumption and costs of the terminal devices.

It may be learned from the foregoing description that a zero-power device may communicate based on a backscatter communication technology. During backscatter communication, a carrier (or a signal) used for backscatter communication needs to be provided. For example, a carrier used for backscatter communication may be a downlink signal in a cellular communication network, or may be an uplink signal in a cellular communication network, or may be a specially introduced dedicated carrier signal (which may be a carrier signal transmitted by a third-party device for backscatter communication).

When performing backscatter communication based on a downlink signal or a dedicated carrier signal, the zero-power terminal device may receive control information transmitted by a corresponding device (for example, a network device or a third-party device that transmits the dedicated carrier signal), and perform, according to the control information, backscatter communication based on the downlink signal or the dedicated carrier signal. However, not all uplink signals can be used for backscatter communication. For example, an uplink signal cannot be used for backscatter communication when the uplink signal has too low signal strength at the time of reaching a zero-power terminal device, or there are too few time domain resources for an uplink signal, or the like. In addition, when backscatter communication is performed based on an uplink signal, the zero-power terminal device does not know which terminal device transmits the uplink signal, cannot learn control information of the uplink signal in advance, and cannot determine a time-frequency resource, signal strength, and the like corresponding to the uplink signal. Thus, it cannot be determined whether the uplink signal can be used for backscatter communication. Therefore, how to perform backscatter communication based on an uplink signal becomes a technical problem that needs to be urgently solved.

To solve one or more of the foregoing technical problems, this application provides a communication method and a communications apparatus. In embodiments of this application, a first terminal device measures a first uplink signal transmitted by a second terminal device to obtain a first measurement result, and may determine, based on the first measurement result, a second uplink signal that can be used for backscatter communication. Based on the second uplink signal, backscatter communication can be implemented.

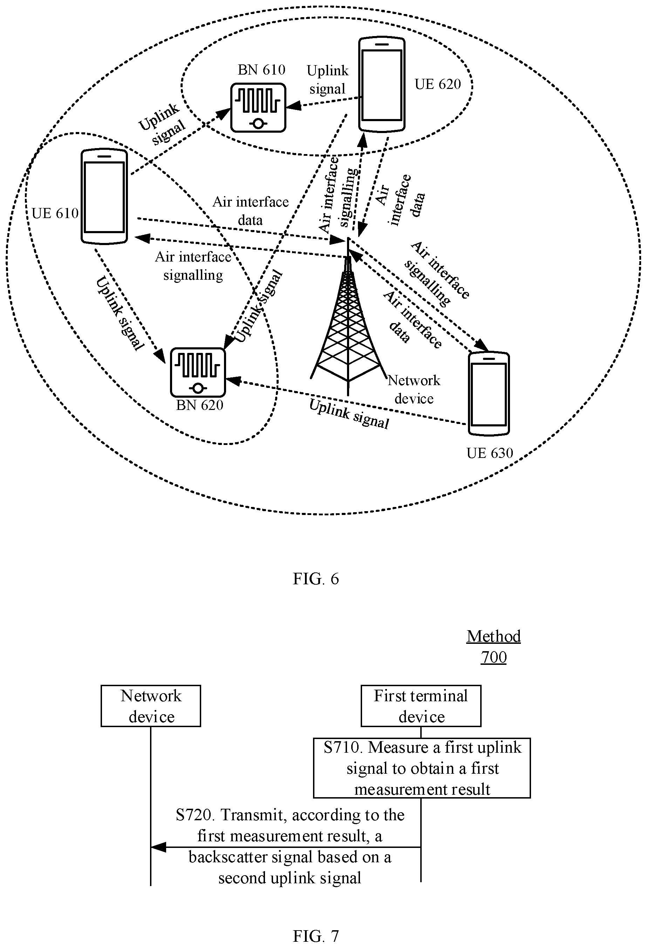

The following exemplarily describes embodiments of this application in detail with reference to FIG. 6.

As shown in FIG. 6, within coverage of a network device, there are a plurality of terminal devices UE 610, UE 620, UE 630, a backscatter node (backscatter node, BN) 610, a BN 620, and the like. The UE 610, the UE 620, and the UE 630 may communicate with the network device (as shown in FIG. 6, receive air interface signaling transmitted by the network device, transmit air interface data to the network device, and the like), and the BN 610 and the BN 620 may be zero-power terminal devices that support backscatter communication, or an active terminal device that supports backscatter communication.

In a communication process, the UE 610, the UE 620, and the UE 630 may transmit an uplink signal to the network device. For example, the uplink signal may be a physical uplink control channel (physical uplink control channel, PUCCH), a physical random access channel (physical random access channel, PRACH), a physical uplink shared channel (physical uplink shared channel, PUSCH), a sounding reference signal (sounding reference signal, SRS), or the like. In this case, the BN 610 and the BN 620 may measure the uplink signal transmitted by another terminal device (for example, the UE 610, the UE 620, and the UE 630), to obtain, through screening based on a measurement result, a terminal device that meets a preset condition, and determine to pair with the terminal device. Subsequently, backscatter communication may be performed based on an uplink signal of the paired terminal device.

For example, in FIG. 6, the BN 610 may measure uplink signals of the UE 610 and the UE 620, and determine, based on a measurement result, that the UE 620 is a paired terminal device. Subsequently, backscatter communication may be performed based on the uplink signal of the UE 620. The BN 2 may measure uplink signals of the UE 610, the UE 620, and the UE 630, and determine, based on a measurement result, that the UE 610 is a paired terminal device. Subsequently, backscatter communication may be performed based on the uplink signal of the UE 610.

It should be noted that the solutions in embodiments of this application may also be applied to a sidelink. For example, the network device in embodiments of this application may be considered as a terminal device in the sidelink. The terminal devices (the first terminal device and the second terminal device) in embodiments of this application may be another terminal device in the sidelink.

With reference to FIG. 7 to FIG. 11, the following exemplarily describes embodiments of this application in detail.

FIG. 7 is a schematic flowchart of a communication method according to an embodiment of this application. The method 700 shown in FIG. 7 may include steps S710 and S720, and details are as follows.

S710. A first terminal device measures a first uplink signal to obtain a first measurement result.

The first terminal device may be a zero-power terminal device or an active terminal device that has a backscatter communication capability.

The first uplink signal may be transmitted by a second terminal device. Optionally, the first uplink signal may be a periodic signal, an aperiodic signal, a semi-static signal, or a dynamic scheduling signal. For example, the first uplink signal may be a PRACH, a PUSCH, a PUCCH, an SRS, or the like.

Optionally, before S710, a network device may transmit first information to the first terminal device. Optionally, the first information may include scheduling information of the first uplink signal, or may be control information or configuration information of the first uplink signal. Correspondingly, the first terminal device may measure the first uplink signal based on the first information to obtain the first measurement result.

Optionally, the network device may alternatively transmit scheduling information, control information, or configuration information to the second terminal device. Correspondingly, the second terminal device may transmit the first uplink signal based on the scheduling information, the control information, or the configuration information. Optionally, the scheduling information, the control information, or the configuration information may be the same as or different from the first information. The scheduling information, the control information, or the configuration information may be simultaneously transmitted or not simultaneously transmitted with the first information.

Optionally, the first uplink signal may include a plurality of uplink signals. Correspondingly, the second terminal device may include a plurality of terminal devices, and the first uplink signal may include a plurality of uplink signals transmitted by the plurality of terminal devices. In this case, the first information may include scheduling information of the plurality of uplink signals (in the first uplink signal), and the first terminal device may measure, based on the scheduling information of the plurality of uplink signals, the plurality of uplink signals transmitted by the plurality of terminal devices.

In some possible implementations, the first terminal device may transmit a measurement result to the network device. Correspondingly, the network device may determine a target terminal device (namely, a terminal device paired with the first terminal device). Optionally, the target terminal device may refer to a terminal device (in the second terminal device) that can transmit an uplink signal for backscatter communication.

For example, after S710, the first terminal device may transmit the first measurement result to the network device.

The first measurement result may include a signal strength of the first uplink signal. Optionally, after measuring the first uplink signal, the first terminal device may directly transmit the measured signal strength of the first uplink signal to the network device. For example, the signal strength of the first uplink signal may include reference signal received power (reference signal received power, RSRP) of the first uplink signal, reference signal received quality (reference signal received quality, RSRQ) of the first uplink signal, and/or information that can represent the signal strength of the first uplink signal.

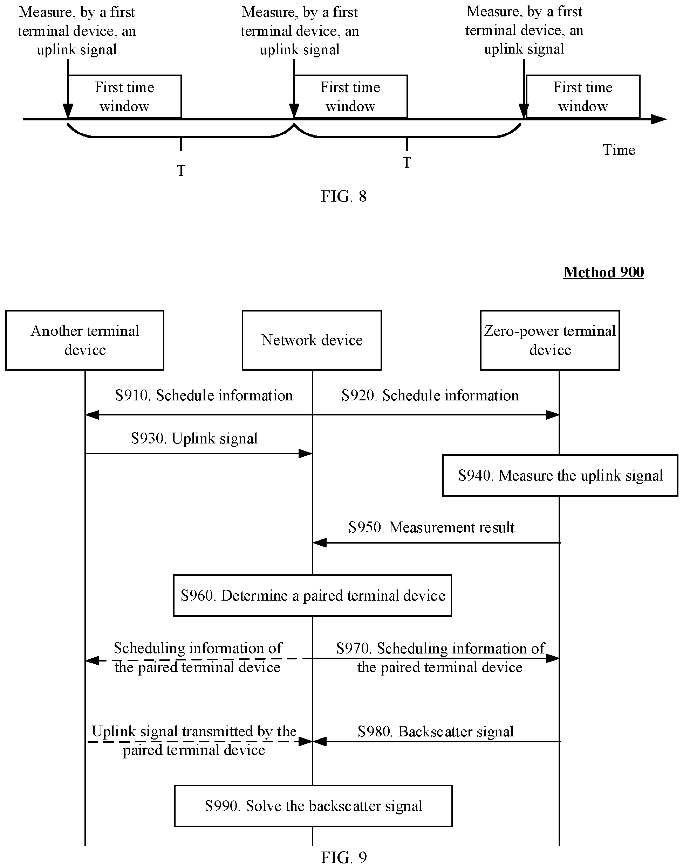

Optionally, the first terminal device may measure the first uplink signal in a first time window to obtain the first measurement result. The first time window may be preset, or may be configured by the network device. For example, as shown in FIG. 8, the first terminal device may measure one or more uplink signals in the first time window.

Optionally, the first time window may be periodic. For example, as shown in FIG. 8, a period of the first time window may be T, and T is a positive number.

A length of a time window (for example, the first time window) for each measurement may be the same, as shown in FIG. 8. For example, the length of the first time window may be preset, or may be configured by the network device. Alternatively, the length of the time window for each measurement may vary. For example, the length of the first time window may be dynamically indicated by the network device.

Further, the first terminal device may transmit, to the network device, a first measurement result in which a signal strength meets a first preset condition. Optionally, the first preset condition may include at least one of the following: signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, where N is a positive integer. The part of the uplink signals, whose signal strengths are greater than the first threshold, of the plurality of uplink signals may refer to N uplink signals of the plurality of uplink signals whose signal strengths are greater than the first threshold.

The first measurement result may also include a time-frequency resource associated with an uplink signal, and the time-frequency resource associated with the first uplink signal may refer to a time-frequency resource in which the uplink signal is located. For example, the first terminal device may determine a time-frequency resource in which an uplink signal (or corresponding to a first measurement result that meets a first preset condition) corresponding to the first measurement result (for example, a signal strength of the first uplink signal as measured) is located, and transmit, to the network device, the time-frequency resource in which the uplink signal is located.

The first measurement result may also include a time domain resource and/or a frequency domain resource of an uplink signal. For example, the first terminal device may determine a time domain resource and/or a frequency domain resource in which an uplink signal (or corresponding to a first measurement result that meets a first preset condition) corresponding to the first measurement result (for example, a signal strength of the first uplink signal as measured) is located, and transmit, to the network device, the time domain resource and/or frequency domain resource in which the uplink signal is located.

The first measurement result may also include an identity of a terminal device associated with an uplink signal. The identity of the terminal device associated with the first uplink signal may refer to an identity of a terminal device that transmits the uplink signal. For example, the first terminal device may determine an identity of a terminal device associated with an uplink signal (or corresponding to a first measurement result that meets a first preset condition) corresponding to the first measurement result (for example, a signal strength of the first uplink signal as measured), and transmit, to the network device, the identity of the terminal device associated with the uplink signal.

An index of scheduling information associated with the first uplink signal may refer to an index of scheduling information used for scheduling the uplink signal. For example, the network device may transmit a scheduling information list (list). The scheduling information list may include one or more pieces of scheduling information. In this case, each piece of scheduling information may correspond to one index in the scheduling information list. Optionally, the scheduling information list may be transmitted to one or more terminal devices simultaneously. For example, the first terminal device may determine an index of scheduling information associated with an uplink signal (or corresponding to a first measurement result that meets a first preset condition) corresponding to the first measurement result (for example, a signal strength of the first uplink signal as measured), and transmit, to the network device, the index of scheduling information associated with the uplink signal.

Optionally, when the first terminal device measures an uplink signal in a first time window shown in FIG. 8, the first terminal device may report a measurement result to the network device after (each time) the first time window ends, or may report a measurement result to the network device after each measurement in the first time window.

It may be learned from the foregoing embodiments that the first measurement result may include at least one of the following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

In other words, in a case that the network device determines a target terminal device, the first measurement result may include various information that enables the network device to determine a terminal device corresponding to the first measurement result, so that the network device determines by which terminal device(s) an uplink signal corresponding to a measurement result that meets a condition is transmitted. For example, the network device may determine the terminal device corresponding to the first measurement result based on a time-frequency resource associated with an uplink signal, a time domain resource associated with an uplink signal, a frequency domain resource associated with an uplink signal, an identity of a terminal device associated with an uplink signal, and/or an index of scheduling information associated with an uplink signal, which are/is included in the first measurement result.

Optionally, the network device may determine the target terminal device based on the first measurement result. For example, the network device may determine, as the target terminal device, a terminal device, whose transmitted uplink signal meets a preset condition (for example, a first preset condition), of a plurality of terminal devices (included in the second terminal device).

Further, the network device may transmit third information to the first terminal device. The third information may be used for indicating the target terminal device in the second terminal device.

In some possible implementations, the first terminal device may determine the target terminal device (namely, a terminal device paired with the first terminal device) based on a measurement result.

Optionally, the first terminal device may determine the target terminal device based on the first measurement result.

The first measurement result may include a frequency domain resource of an uplink signal. Optionally, the first terminal device may determine, as the target terminal device, a terminal device associated with an uplink signal, whose frequency domain resource is within a bandwidth capable of being detected by the first terminal device, in the first uplink signal. For example, the first terminal device may detect an uplink signal in a bandwidth range capable of being detected by the first terminal device, and determine, as the target terminal device, a terminal device associated with the uplink signal, which is detected by the first terminal device, in the first uplink signal.

The first measurement result may also include a signal strength of the first uplink signal. Optionally, the first terminal device may determine the target terminal device based on the signal strength of the first uplink signal. For example, the first measurement result may determine, as the target terminal device, a terminal device associated with an uplink signal, whose signal strength is greater than a second threshold, in the first uplink signal.

The first measurement result may also include a time domain resource of an uplink signal. Optionally, the first terminal device may determine, as the target terminal device, a terminal device associated with an uplink signal, whose time domain resource is enough to perform backscatter communication, in the first uplink signal. For example, the first terminal device may determine a time domain resource in which the first uplink signal is located, and determine, as the target terminal device, a terminal device associated with an uplink signal, whose time domain resource is greater than a time domain resource required for backscatter communication, in the first uplink signal.

It may be learned from the foregoing embodiments that the first measurement result may include at least one of the following: a signal strength of the first uplink signal, a time domain resource associated with the first uplink signal, or a frequency domain resource associated with the first uplink signal. In addition, the first terminal device may determine, as the target terminal device, a terminal device corresponding to the first measurement result that meets a second preset condition. The second preset condition may include at least one of the following: a signal strength of an uplink signal, whose signal strength is greater than a second threshold, of the plurality of uplink signals, a frequency domain resource of an uplink signal, whose frequency domain resource is within a bandwidth capable of being detected by the first terminal device, of the plurality of uplink signals, or a time domain resource of an uplink signal, whose time domain resource is greater than a time domain resource required for backscatter communication, of the plurality of uplink signals.

In other words, in a case that the target terminal device is determined by the first terminal device, the first measurement result may include various types of information that can enable the first terminal device to determine (or obtain through screening) the target terminal device.

Certainly, the first terminal device may also determine, as the target terminal device, a terminal device corresponding to a first measurement result in which a signal strength meets the first preset condition.

Optionally, in a case that the target terminal device is determined by the first terminal device, the first terminal device may also transmit the first measurement result to the network device.

Optionally, the first terminal device may alternatively transmit a (determined) target terminal device to the network device. Correspondingly, in a subsequent process, the network device may transmit only scheduling information of the target terminal device to the first terminal device.

S720. The first terminal device transmits, according to the first measurement result, a backscatter signal to the network device based on the second uplink signal.

The second uplink signal and the first uplink signal may be a same signal. The second uplink signal and the first uplink signal may not be a same signal but are transmitted by a same device. For example, the second uplink signal may be transmitted by the second terminal device. The second uplink signal and the first uplink signal may not be a same signal and are not transmitted by a same device.

Optionally, the second uplink signal may be transmitted by the second terminal device to the network device; or may be transmitted by part of terminal devices in the second terminal device to the network device. For example, the second uplink signal may be transmitted to the network device by a target terminal device in the second terminal device, and the target terminal device may refer to a terminal device (in the second terminal device) that can transmit an uplink signal for backscatter communication.

Optionally, before S720, the network device may transmit second information to the first terminal device. The second information may include scheduling information of the second uplink signal, or may be control information or configuration information of the second uplink signal.

Optionally, the second information may include scheduling information for the second terminal device, or may include only scheduling information for the target terminal device. Optionally, the second information and the third information may be same information. For example, the second information may indicate only the scheduling information for the target terminal device. In this case, it is equivalent to that the second information implicitly indicates the target terminal device. Alternatively, the second information may explicitly indicate the target terminal device.

Optionally, the second information may also include scheduling information for the first terminal device to perform backscatter communication. For example, the scheduling information may indicate a transport block size (transport block size, TBS), a code rate, a time-frequency resource, a coding algorithm and/or the like for the first terminal device to perform backscatter communication.

Alternatively, the network device may transmit sixth information to the first terminal device, where the sixth information may include scheduling information for the first terminal device to perform backscatter communication. Optionally, the network device may simultaneously transmit the second information and the sixth information to the first terminal device, or the network device may separately (that is, not simultaneously) transmit the second information and the sixth information to the first terminal device. This is not limited in embodiments of this application.

Alternatively, the scheduling information for the first terminal device to perform backscatter communication may be preconfigured scheduling-free information or semi-static information. In this case, the network device does not need to transmit the scheduling information for backscatter communication to the first terminal device.

Optionally, the network device may solve a backscatter signal.

Further, the network device may further feed back a receiving status and/or a solved result of a backscatter signal to the first terminal device. Optionally, the network device may transmit fourth information to the first terminal device. The fourth information may indicate whether the network device successfully receives the backscatter signal transmitted by the first terminal device based on the second uplink signal. For example, in a case of the solving being correct, the fourth information may indicate acknowledgement (acknowledgement, ACK) information, to indicate that the network device successfully receives the backscatter signal. In a case of the solving being failed, the fourth information may indicate negative acknowledgement (negative acknowledgement, NACK) information, to indicate that the network device fails to receive the backscatter signal.

After foregoing embodiments, the first terminal device may continue to transmit the backscatter signal to the network device.

In this case, the first terminal device may not measure an uplink signal, and directly transmit the backscatter signal based on the uplink signal transmitted by the target terminal device.

For example, the network device may transmit fifth information to the first terminal device. The fifth information may include scheduling information of a third uplink signal. Optionally, the third uplink signal may be transmitted by the target terminal device in the second terminal device.

Similar to foregoing embodiments, the network device may transmit the scheduling information of backscatter communication to the first terminal device by using the fifth information. Alternatively, the network device may transmit the scheduling information of the backscatter communication to the first terminal device by using other information (for example, seventh information), where the other information and the fifth information may be simultaneously transmitted or not simultaneously transmitted. Alternatively, the scheduling information for the first terminal device to perform backscatter communication may be pre-configured scheduling-free information or semi-static information.

Correspondingly, the first terminal device may transmit, according to the fifth information, a backscatter signal to the network device based on the third uplink signal.

Optionally, the first terminal device may not measure the uplink signal within a preset time period or a preset quantity of times (for transmitting the backscatter signal), and directly transmit the backscatter signal based on the uplink signal transmitted by the target terminal device. The preset time period or the preset quantity of times herein may be specified in advance or may be configured by the network device. The preset time period or the preset quantity of times may be related to mobility of the terminal device. For example, when the mobility of the first terminal device is relatively high, the preset time period or the preset quantity of times may be relatively small. When a location of the first terminal device is fixed or mobility is relatively low, the preset time period or the preset quantity of times may be relatively large.

Alternatively, the first terminal device may continue to measure the uplink signal, and transmit a backscatter signal based on a measurement result. For a specific process of transmitting the backscatter signal based on the measurement result, reference may be made to foregoing embodiments. Details are not described herein again.

Optionally, in a case that a terminal device corresponding to a second measurement result that meets a third preset condition exists in the target terminal device, the first terminal device may transmit, according to the fifth information, the backscatter signal to the network device based on the third uplink signal; in a case that a terminal device corresponding to a second measurement result that meets a third preset condition does not exist in the target terminal device, the first terminal device may not transmit the backscatter signal.

For example, the first terminal device may measure, based on the fifth information, the third uplink signal transmitted by the target terminal device to obtain a second measurement result, and determine, based on the second measurement result, a terminal device corresponding to the second measurement result that meets the third preset condition in the target terminal device. Therefore, backscatter communication may be performed based on an uplink signal transmitted by the terminal device corresponding to the second measurement result that meets the third preset condition.

The third preset condition may include at least one of the following: a signal strength of an uplink signal, whose signal strength is greater than a third threshold, in the third uplink signal, a frequency domain resource of an uplink signal, whose frequency domain resource is within a bandwidth capable of being detected by the first terminal device, in the third uplink signal, or a time domain resource of an uplink signal, whose time domain resource is greater than a time domain resource required for backscatter communication, in the third uplink signal.

Further, the network device may further solve the backscatter signal, and may further feed back a receiving status and/or a solved result of the backscatter signal to the first terminal device. For a specific process, reference may be made to foregoing embodiments. Details are not described herein again.

Alternatively, if no backscatter signal is detected by the network device on a time-frequency resource corresponding to all third uplink signals (uplink signals transmitted by the target terminal device), it indicates that the target terminal device fails, or pairing information fails. In this case, the network device may notify the first terminal device, so that the first terminal device re-determines a paired terminal device. For a method for redetermining a paired terminal device, reference may be made to the foregoing embodiments. Details are not described herein.

In embodiments of this application, a first terminal device measures a first uplink signal transmitted by a second terminal device to obtain a first measurement result, and determines, based on the first measurement result, a second uplink signal that can be used for backscatter communication, so that backscatter communication can be performed based on the second uplink signal.

In addition, a terminal device (such as a zero-power terminal device) capable of performing backscatter communication generally has characteristics such as low power consumption and low costs. Through implementation of the backscatter communication based on an uplink signal, such terminal device is facilitated to be further applied to a communications system, thereby reducing costs and power consumption of the terminal devices.

In implementation of this application, a zero-power terminal device may report, to a network device, a device type or its capability of supporting backscatter communication. After receiving report information, the network device may identify the capability that the terminal device may support backscatter communication, so that the terminal device may be scheduled to perform backscatter communication.

The following uses a zero-power terminal device as an example to describe embodiments in this application in detail with reference to FIG. 9 to FIG. 11.

FIG. 9 is a schematic flowchart of a communication method according to an embodiment of this application. The method 900 shown in FIG. 9 may include steps S910 to S990. Details are as follows.

S910. A network device transmits scheduling information to another terminal device.

The scheduling information may be used for scheduling the another terminal device to transmit an uplink signal. The another terminal device may include a plurality of terminal devices. The uplink signal may be a periodic signal, an aperiodic signal, a semi-static signal, a dynamic scheduling signal, or the like. For example, the uplink signal may be a PRACH, a PUSCH, a PUCCH, an SRS, or the like.

Optionally, in S910, the network device may also transmit control information or configuration information to the another terminal device. Correspondingly, the another terminal device may transmit an uplink signal based on the control information or the configuration information.

S920. The network device transmits the scheduling information of the another terminal device to a zero-power terminal device.

The zero-power terminal device may determine, based on the scheduling information, a time-frequency resource for the another terminal device to transmit an uplink signal. Optionally, the scheduling information may be transmitted simultaneously with the scheduling information transmitted by the network device to the another terminal device in S910, or may be not transmitted simultaneously with the scheduling information transmitted by the network device to the another terminal device in S910.

It should be noted that, in S910, the network device may perform normal scheduling on the another terminal device. Correspondingly, in S920, the network device may forward the scheduling information of the uplink signal in S910 to the zero-power terminal device. Alternatively, in S910, to schedule the zero-power terminal device to perform backscatter communication, the network device may specifically schedule the another terminal device to transmit a specific uplink signal (for example, an SRS).

S930. The another terminal device transmits the uplink signal based on the scheduling information.

S940. The zero-power terminal device measures the uplink signal transmitted by the another terminal device.

The zero-power terminal device may determine, based on the scheduling information received in S920, a time-frequency resource for the another terminal device to transmit the uplink signal, and measure, on a corresponding time-frequency resource, the uplink signal transmitted by the another terminal device.

In a case that the another terminal device may include a plurality of terminal devices, the scheduling information received by the zero-power terminal device in S920 may also include scheduling information corresponding to the plurality of terminal devices. Correspondingly, the zero-power terminal device may measure a plurality of uplink signals transmitted by the plurality of terminal devices.

The zero-power terminal device may measure, in the time window shown in FIG. 8, the uplink signal transmitted by the another terminal device.

S950. The zero-power terminal device reports a measurement result to the network device.

The measurement result may include at least one of the following: a signal strength of the uplink signal (received from the another terminal device), a time-frequency resource associated with the uplink signal, a time domain resource associated with the uplink signal, a frequency domain resource associated with the uplink signal, an identity of a terminal device associated with the uplink signal, or an index of scheduling information associated with the uplink signal.

The reported measurement result may include at least one of the following: a signal strength of the uplink signal which is received and transmitted from the another terminal device, a signal strength of an uplink signal, which meets a preset condition, of the uplink signals which is received and transmitted from the another terminal device, a time-frequency resource associated with the uplink signal (which is received and transmitted from the another terminal device), an identity of the terminal device, and/or an index of the scheduling information.

Optionally, the zero-power terminal device may also transmit, to the network device, a measurement result in which a signal strength meets a preset condition. The preset condition may include at least one of the following: a signal strength that is greater than a first threshold, N (N>=1) signals whose signal strengths are strongest, or N signals whose signal strengths are greater than a first threshold and are strongest, where N is a positive integer.

S960. The network device determines, based on the measurement result, the another terminal that is paired with the zero-power terminal device.

The network device may determine that N (N>=1) terminal devices with the strongest signal strength in the measurement result are the paired terminal devices, or determine that all terminal devices with signal strengths greater than the first threshold are the paired terminal devices, or determine that N terminal devices with signal strengths greater than the first threshold and having the strongest signal strength are the paired terminal devices. In a case that an identity of a terminal cannot be identified, the network device may determine a terminal device (corresponding to a time-frequency resource) by using the time-frequency resource.

The network device may store pairing information, and the pairing information may represent a pairing relationship between the zero-power terminal device and the another terminal device. Optionally, the pairing information may be used for indicating the another terminal device paired with the zero-power terminal device. For example, the pairing information may include at least one of the following: a user identity of the another terminal device, a time-frequency resource for the another terminal device to transmit an uplink signal, or an index of scheduling information for the another terminal device to transmit the uplink signal.

Certainly, the paired terminal device may alternatively be determined by the zero-power terminal device, and the zero-power terminal device transmits the pairing information to the network device.

S970. The network device transmits scheduling information to the zero-power terminal device.

The scheduling information may include scheduling information of backscatter communication and/or scheduling information of a paired terminal device. The scheduling information of the paired terminal device may be used by the paired terminal device to transmit an uplink signal, and the scheduling information of the backscatter communication may be used by the zero-power terminal device to transmit a backscatter signal.

Optionally, the network device may transmit the scheduling information of the paired terminal device to the zero-power terminal device. For example, when the paired terminal device has an uplink signal for transmission, the network device may transmit the scheduling information of the paired terminal device to the zero-power terminal device. Optionally, the network device may simultaneously transmit the scheduling information of the paired terminal device to the paired terminal device and the zero-power terminal device. Alternatively, the network device may not simultaneously transmit the scheduling information of the paired terminal device to the paired terminal device and the zero-power terminal device.

Optionally, the network device may transmit the scheduling information of the backscatter communication to the zero-power terminal device. For example, the network device may simultaneously transmit the scheduling information of the backscatter communication and the scheduling information of the paired terminal device to the zero-power terminal device (in this case, the scheduling information of the backscatter communication and the scheduling information of the paired terminal device may be carried in same information). Alternatively, the network device may separately transmit the scheduling information of the backscatter communication and the scheduling information of the paired terminal device to the zero-power terminal device (in this case, the scheduling information of the backscatter communication and the scheduling information of the paired terminal device may be separately carried in different information). Alternatively, the scheduling information of the backscatter communication may be pre-configured scheduling-free information or semi-static information.

S980. The zero-power terminal device performs backscatter communication.

The zero-power terminal device may perform backscatter communication based on a corresponding uplink signal and the scheduling information transmitted by the network device in S970.

S990. The network device solves a backscatter signal.

The network device may solve the backscatter signal. When the solving is correct, the network device may transmit ACK information to the zero-power terminal device. When the solving fails, the network device may transmit NACK information to the zero-power terminal device. Alternatively, a process of S960 to S990 in FIG. 9 may be repeated. Alternatively, the process of S960 to S990 in FIG. 9 may be repeated while the network device transmits the NACK information.

Alternatively, in the foregoing embodiment, in a case that S960 to S990 need to be repeated when the solving fails, S910 to S990 may be directly repeated instead of S960 to S990. Alternatively, S960 to S990 may be repeated first, and then S910 to S990 are repeated in a case that the quantity of times that the solving fails continuously reaches a preset quantity of times or the solving fails for a preset period of time.

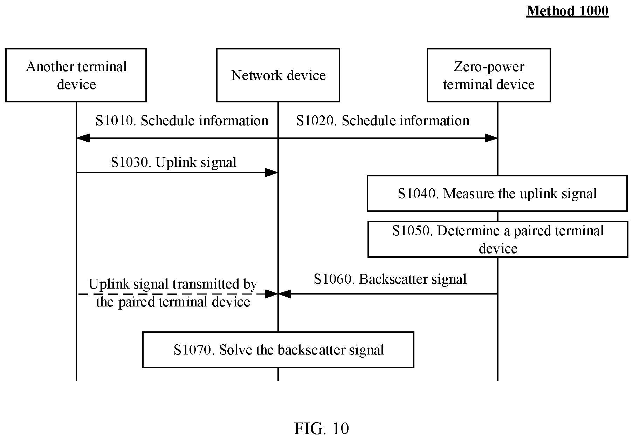

FIG. 10 is a schematic flowchart of a communication method according to an embodiment of this application. The method 1000 shown in FIG. 10 may include steps S1010 to S1090. Details are as follows.

S1010. A network device transmits scheduling information to another terminal device.

The scheduling information may be used for scheduling the another terminal device to transmit an uplink signal. The another terminal device may include a plurality of terminal devices. The uplink signal may be a periodic signal, an aperiodic signal, a semi-static signal, a dynamic scheduling signal, or the like. For example, the uplink signal may be a PRACH, a PUSCH, a PUCCH, an SRS, or the like.

S1020. The network device transmits the scheduling information of the another terminal device to a zero-power terminal device.

The zero-power terminal device may determine, based on the scheduling information, a time-frequency resource for the another terminal device to transmit an uplink signal. Optionally, the scheduling information may be transmitted simultaneously as the scheduling information transmitted by the network device to the another terminal device in S1010, or may be not transmitted simultaneously as the scheduling information transmitted by the network device to the another terminal device in S1010.

It should be noted that, in S 1010, the network device may perform normal scheduling on the another terminal device. Correspondingly, in S1020, the network device may forward the scheduling information of the uplink signal in S1010 to the zero-power terminal device. Alternatively, in S1010, to schedule the zero-power terminal device to perform backscatter communication, the network device may specifically schedule the another terminal device to transmit a specific uplink signal (for example, an SRS).

Optionally, the network device may transmit the scheduling information of the backscatter communication to the zero-power terminal device. For example, the network device may simultaneously transmit the scheduling information of the backscatter communication and the scheduling information of the another terminal device to the zero-power terminal device (in this case, the scheduling information of the backscatter communication and the scheduling information of the another terminal device may be carried in same information). Alternatively, the network device may separately transmit the scheduling information of the backscatter communication and the scheduling information of the another terminal device to the zero-power terminal device (in this case, the scheduling information of the backscatter communication and the scheduling information of the another terminal device may be separately carried in different information). Alternatively, the scheduling information of the backscatter communication may be pre-configured scheduling-free information or semi-static information.

S1030. The another terminal device transmits the uplink signal based on the scheduling information.

S1040. The zero-power terminal device measures the uplink signal transmitted by the another terminal device.

The zero-power terminal device may determine, based on the scheduling information received in S1020, a time-frequency resource for the another terminal device to transmit the uplink signal, and measure, on a corresponding time-frequency resource, the uplink signal transmitted by the another terminal device.

In a case that the another terminal device may include a plurality of terminal devices, the scheduling information received by the zero-power terminal device in S1020 may also include scheduling information corresponding to the plurality of terminal devices. Correspondingly, the zero-power terminal device may measure a plurality of uplink signals transmitted by the plurality of terminal devices, to obtain a measurement result. The measurement result may include at least one of the following: a signal strength of an uplink signal (which is received and transmitted from the another terminal device), a time domain resource associated with an uplink signal, or a frequency domain resource associated with an uplink signal.

The zero-power terminal device may measure, in the time window shown in FIG. 8, the uplink signal transmitted by the another terminal device.

The zero-power terminal device may report the measurement result to the network device. Optionally, the measurement result may include measurement results corresponding to all terminal devices in the another terminal device, or the measurement result may include measurement results corresponding to part of terminal devices in the another terminal device.

For example, when the zero-power terminal device detects that a signal strength of an uplink signal is greater than a first threshold, but a time domain resource corresponding to the uplink signal is insufficient for backscatter communication, the zero-power terminal device may report this measurement result to the network device. Correspondingly, after receiving the measurement result, the network device may determine, based on information such as a solution of a subsequent backscatter signal, whether a time-frequency resource or the like of a corresponding terminal device needs to be adjusted, so as to enable the terminal device to be used as a paired terminal device.

S 1050. The zero-power terminal device determines a paired terminal device.

Optionally, the another terminal device may include a plurality of terminal devices. The zero-power terminal device may determine, as the paired terminal device, a terminal device corresponding to a measurement result that meets a preset condition.

For example, the preset condition may include at least one of the following: a signal strength of an uplink signal, whose signal strength is greater than a second threshold, of the plurality of uplink signals (which are transmitted by the plurality of terminal devices), a frequency domain resource of an uplink signal, whose frequency domain resource is within a bandwidth capable of being detected by the zero-power terminal device, of the plurality of uplink signals, or a time domain resource of an uplink signal, whose time domain resource is greater than a time domain resource required for backscatter communication, of the plurality of uplink signals.

Optionally, the paired terminal device may not include the following terminal device as mentioned in S 1040: a signal strength of an uplink signal transmitted from the terminal device is greater than the first threshold, but a time domain resource or the like corresponding to the uplink signal is insufficient for backscatter communication.

S 1060. The zero-power terminal device performs backscatter communication.

The zero-power terminal device may perform the backscatter communication based on the uplink signal transmitted by the paired terminal device.

S1070. The network device solves a backscatter signal.

The network device may solve the backscatter signal. When the solving is correct, the network device may transmit ACK information to the zero-power terminal device. After receiving the ACK information, the zero-power terminal device may stop detection of an uplink signal transmitted by the another terminal device and a backscatter communication process. Alternatively, the network device may stop transmitting corresponding configuration information of the uplink signal to a new terminal device.

When the solving fails, the network device may transmit NACK information to the zero-power terminal device. Alternatively, a process of S1010 to S1060 in FIG. 10 may be repeated. Alternatively, a process of S1010 to S1060 in FIG. 10 may be repeated while the network device transmits the NACK information.

If no backscatter signal is detected by the network device on any of the time-frequency resources corresponding to all uplink signals (uplink signals transmitted by a target terminal device), a process of S1010 to S1060 may be repeated. When the backscatter signal is detected, the network device may use a terminal device corresponding to an uplink signal on one or more time-frequency resources where the backscatter signal is located as the paired terminal device of the zero-power terminal device. Pairing information is stored, and the scheduling in S1010 and S1020 is performed based on these paired terminal devices in a subsequent backscatter communication process.

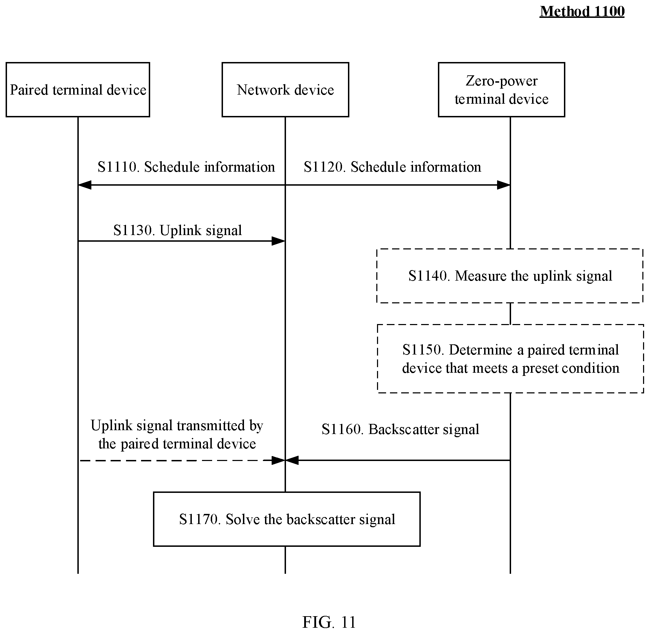

In a case that the zero-power terminal device is not scheduled to perform backscatter communication based on an uplink signal for the first time, the pairing information is not empty, or the pairing information is valid, reference may be made to the following embodiment illustrated in FIG. 11.

FIG. 11 is a schematic flowchart of a communication method according to an embodiment of this application. The method 1100 shown in FIG. 11 may include steps S1110 to S1170. Details are as follows.

S1110. A network device transmits scheduling information to a paired terminal device.

The scheduling information may be used for scheduling the paired terminal device to transmit an uplink signal. The paired terminal device may be part of or all of one or more other terminal devices. The uplink signal may be a periodic signal, an aperiodic signal, a semi-static signal, a dynamic scheduling signal, or the like. For example, the uplink signal may be a PRACH, a PUSCH, a PUCCH, an SRS, or the like.

Optionally, in S1110, the network device may also transmit scheduling information to an unpaired terminal device in the other terminal devices.

S1120. The network device transmits the scheduling information of the paired terminal device to a zero-power terminal device.

The network device may simultaneously transmit the scheduling information of the paired terminal device to the paired terminal device and the zero-power terminal device. Alternatively, the network device may not simultaneously transmit the scheduling information of the paired terminal device to the paired terminal device and the zero-power terminal device.

Optionally, the network device may transmit scheduling information of backscatter communication to the zero-power terminal device. For example, the network device may simultaneously transmit the scheduling information of the backscatter communication and the scheduling information of the paired terminal device to the zero-power terminal device (in this case, the scheduling information of the backscatter communication and the scheduling information of the paired terminal device may be carried in same information). Alternatively, the network device may separately transmit the scheduling information of the backscatter communication and the scheduling information of the paired terminal device to the zero-power terminal device (in this case, the scheduling information of the backscatter communication and the scheduling information of the paired terminal device may be separately carried in different information). Alternatively, the scheduling information of the backscatter communication may be pre-configured scheduling-free information or semi-static information.

S1130. The paired terminal device transmits an uplink signal based on the scheduling information.

S1160. The zero-power terminal device performs backscatter communication.

Because pairing has been completed in a previous process (pairing information is not empty or pairing information is valid), the zero-power terminal device may directly perform backscatter communication based on the scheduling information transmitted by the network device in S1120 and based on the uplink information transmitted by the paired terminal device.

Alternatively, in some possible implementations, the zero-power terminal device may further measure the uplink signal transmitted by the paired terminal device. For example, before S1160, the method 1100 may further include steps S1140 and S1150, which are specifically as follows.

S1140. The zero-power terminal device measures the uplink signal transmitted by the paired terminal device.

The zero-power terminal device may determine, based on the scheduling information received in S1120, a time-frequency resource for the paired terminal device to transmit the uplink signal, and measure, on the corresponding time-frequency resource, the uplink signal transmitted by the paired terminal device to obtain a measurement result.

In a case that the paired terminal device may include a plurality of terminal devices, the scheduling information received by the zero-power terminal device in S1020 may also include scheduling information corresponding to the plurality of terminal devices. Correspondingly, the zero-power terminal device may measure a plurality of uplink signals transmitted by the plurality of terminal devices.

The zero-power terminal device may measure, in the time window shown in FIG. 8, the uplink signal transmitted by the paired terminal device.

The zero-power terminal device may report the measurement result to the network device. For example, when the zero-power terminal device detects that a signal strength of an uplink signal is greater than a third threshold, but a time domain resource corresponding to the uplink signal is insufficient for backscatter communication, the zero-power terminal device may report this measurement result to the network device. Correspondingly, after receiving the measurement result, the network device may determine the paired terminal device based on the measurement result.

S1150. The zero-power terminal device determines a paired terminal device that meets a preset condition.

The zero-power terminal device may determine, as the paired terminal device that meets the preset condition, a terminal device, which is corresponding to a measurement result that meets the preset condition, in the paired terminal device.

For example, the preset condition may include at least one of the following: a signal strength of an uplink signal, whose signal strength is greater than a third threshold, of uplink signals (transmitted by the paired terminal device), a frequency domain resource of an uplink signal, whose frequency domain resource is within a bandwidth capable of being detected by the zero-power terminal device, of the uplink signals, or a time domain resource of an uplink signal, whose time domain resource is greater than a time domain resource required for backscatter communication, of the uplink signals.

In this case, in S1160, the zero-power terminal device may perform backscatter communication based on the uplink information transmitted by the terminal device, which is corresponding to the foregoing measurement result, in the paired terminal device.

S1170. The network device receives a backscatter signal.

If no backscatter signal is detected by the network device on any of time-frequency resources corresponding to all uplink signals (uplink signals transmitted by a target terminal device), a process of S1010 to S1060 may be repeated. When detecting the backscatter signal, the network device may solve the backscatter signal.

The network device may solve the backscatter signal. When the solving is correct, the network device may transmit ACK information to the zero-power terminal device. After receiving the ACK information, the zero-power terminal device may stop detection of an uplink signal transmitted by the paired terminal device and a backscatter communication process. Alternatively, the network device may stop transmitting corresponding configuration information of the uplink signal to a new terminal device.

When the solving fails, the network device may transmit NACK information to the zero-power terminal device. Alternatively, a process of S1110 to S1160 in FIG. 11 may be repeated. Alternatively, a process of S1110 to S1160 in FIG. 11 may be repeated while the network device transmits the NACK information.

Certainly, a failure time of pairing information may alternatively be preset, and in a case that the pairing information fails, a process of S1110 to S1160 is performed again. The failure time may be related to mobility of the zero-power terminal device or the paired terminal device. For example, when the mobility of the zero-power terminal device is relatively high, the failure time may be relatively small. When a position of the zero-power terminal device is fixed or the mobility thereof is low, the failure time may be greater.

In embodiments of this application, the embodiments illustrated in FIG. 9, FIG. 10, and FIG. 11 may be used in combination. For example, when the network device schedules the zero-power terminal device to perform backscatter communication for the first time, processing may be performed based on the embodiment in FIG. 10. If backscatter communication is not successfully performed for the first time, processing may be performed based on the embodiment in FIG. 9. In a case that backscatter communication is not performed for the first time, pairing information is not empty, or pairing information is valid, processing may be performed based on the embodiment in FIG. 11.

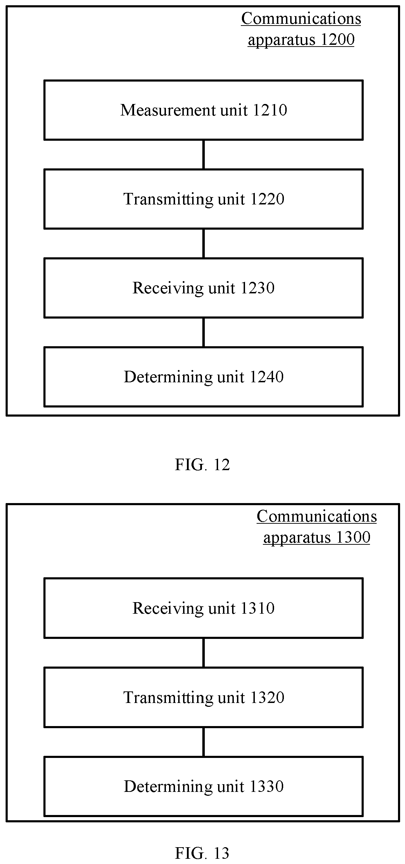

The method embodiments of this application are described in detail above with reference to FIG. 1 to FIG. 11. Apparatus embodiments of this application are described below in detail with reference to FIG. 12 to FIG. 14. It should be understood that the description of the method embodiments corresponds to the description of the apparatus embodiments mutually, and therefore, for parts that are not described in detail, reference may be made to the foregoing method embodiments.

FIG. 12 is a schematic structural diagram of a communications apparatus according to an embodiment of this application. A communications apparatus 1200 in FIG. 12 includes a measurement unit 1210 and a transmitting unit 1220, which are specifically as follows.

The measurement unit 1210 is configured to measure a first uplink signal to obtain a first measurement result.

The transmitting unit 1220 is configured to transmit, according to the first measurement result, a backscatter signal to a network device based on a second uplink signal.

The first uplink signal is transmitted by a second terminal device.

Optionally, the apparatus 1200 further includes a receiving unit 1230, configured to receive first information transmitted by the network device, where the first information includes scheduling information of the first uplink signal. The measurement unit 1210 is specifically configured to measure the first uplink signal based on the first information to obtain the first measurement result.

Optionally, the first uplink signal is a periodic signal, an aperiodic signal, a semi-static signal, or a dynamic scheduling signal.

Optionally, the measurement unit 1210 is specifically configured to measure the first uplink signal in a preset time window to obtain the first measurement result.

Optionally, the apparatus 1200 further includes a receiving unit 1230, configured to receive second information transmitted by the network device, where the second information includes scheduling information of the second uplink signal.

Optionally, the transmitting unit 1220 is further configured to transmit the first measurement result to the network device, where the first measurement result includes at least one of the following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

Optionally, the second terminal device includes a plurality of terminal devices, and the first uplink signal includes a plurality of uplink signals transmitted by the plurality of terminal devices. The transmitting unit is specifically configured to transmit, to the network device, the first measurement result in which a signal strength meets a first preset condition, and the first preset condition includes at least one of following: signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, where N is a positive integer.

Optionally, the second terminal device includes a plurality of terminal devices, the second uplink signal is transmitted by a target terminal device in the second terminal device. The apparatus 1200 further includes a receiving unit 1230, configured to receive third information transmitted by the network device, and the third information is used for indicating the target terminal device.

Optionally, the second terminal device includes a plurality of terminal devices, the second uplink signal is transmitted by a target terminal device in the plurality of terminal devices, and the first measurement result includes at least one of the following: a signal strength of the first uplink signal, a time domain resource associated with the first uplink signal, or a frequency domain resource associated with the first uplink signal. The apparatus further includes a determining unit 1240, configured to determine the target terminal device; and the transmitting unit 1220 is further configured to transmit the backscatter signal to the network device based on the second uplink signal.

Optionally, the first uplink signal includes a plurality of uplink signals transmitted by the plurality of terminal devices. The determining unit 1240 is specifically configured to determine, as the target terminal device, a terminal device corresponding to the first measurement result that meets a second preset condition, and the second preset condition includes at least one of the following: a signal strength of an uplink signal, whose signal strength is greater than a second threshold, of the plurality of uplink signals, a frequency domain resource of an uplink signal, whose frequency domain resource is within a bandwidth capable of being detected by the apparatus, of the plurality of uplink signals, or a time domain resource of an uplink signal, whose time domain resource is greater than a time domain resource required for backscatter communication, of the plurality of uplink signals.

Optionally, the apparatus 1200 further includes a receiving unit 1230, configured to receive fourth information transmitted by the network device, where the fourth information is used for indicating whether the network device successfully receives the backscatter signal transmitted by the apparatus based on the second uplink signal.

Optionally, the apparatus 1200 further includes a receiving unit 1230, configured to receive fifth information transmitted by the network device, where the fifth information includes scheduling information of a third uplink signal, and the third uplink signal is transmitted by a target terminal device in the second terminal device. The transmitting unit is further configured to transmit, according to the fifth information, a backscatter signal to the network device based on the third uplink signal.

Optionally, the third uplink signal is transmitted by a terminal device, which is corresponding to a second measurement result that meets a third preset condition, in the target terminal device, the measurement unit 1210 is further configured to measure, based on the fifth information, the third uplink signal transmitted by the target terminal device to obtain the second measurement result. The apparatus 1200 further includes a determining unit 1240, configured to determine the terminal device, which is corresponding to the second measurement result that meets the third preset condition, in the target terminal device. The third preset condition includes at least one of the following: a signal strength of an uplink signal, whose signal strength is greater than a third threshold, in the third uplink signal, a frequency domain resource of an uplink signal, whose frequency domain resource is within a bandwidth capable of being detected by the apparatus, in the third uplink signal, or a time domain resource of an uplink signal, whose time domain resource is greater than a time domain resource required for backscatter communication, in the third uplink signal.

Optionally, the transmitting unit 1220 is specifically configured to: in a case that the terminal device corresponding to the second measurement result that meets the third preset condition exists in the target terminal device, transmit the backscatter signal to the network device based on an uplink signal transmitted by the terminal device corresponding to the second measurement result that meets the third preset condition; in a case that the terminal device corresponding to the second measurement result that meets the third preset condition does not exist in the target terminal device, skip transmission of the backscatter signal.

Optionally, the apparatus 1200 is a zero-power terminal device.

FIG. 13 is a schematic structural diagram of a communications apparatus according to an embodiment of this application. The communications apparatus 1300 in FIG. 13 includes a receiving unit 1310, which is specifically as follows:

The receiving unit 1310 is configured to receive a backscatter signal transmitted by a first terminal device based on a second uplink signal, where the backscatter signal is transmitted by the first terminal device according to a first measurement result, and the first measurement result is obtained through performing, by the first terminal device, a measurement of a first uplink signal transmitted by a second terminal device.

Optionally, the apparatus 1300 further includes a transmitting unit 1320, configured to transmit first information to the first terminal device, where the first information includes scheduling information of the first uplink signal.

Optionally, the first uplink signal is a periodic signal, an aperiodic signal, a semi-static signal, or a dynamic scheduling signal.

Optionally, the apparatus 1300 further includes a transmitting unit 1320, configured to transmit second information to the first terminal device, where the second information includes scheduling information of the second uplink signal.

Optionally, the receiving unit 1310 is further configured to receive the first measurement result transmitted by the first terminal device, where the first measurement result includes at least one of the following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

Optionally, the second terminal device includes a plurality of terminal devices, the first uplink signal includes a plurality of uplink signals transmitted by the plurality of terminal devices, where the receiving unit 1310 is specifically configured to receive the first measurement result that is transmitted by the first terminal device and in which a signal strength meets a first preset condition, and the first preset condition includes at least one of the following: signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, where N is a positive integer.

Optionally, the second terminal device includes a plurality of terminal devices, and the second uplink signal is transmitted by a target terminal device in the second terminal device. The apparatus further includes a determining unit 1330 and a transmitting unit 1320, where the determining unit 1330 is configured to determine the target terminal device based on the first measurement result; and the transmitting unit 1320 is configured to transmit third information to the first terminal device, where the third information is used for indicating the target terminal device.

Optionally, the second terminal device includes a plurality of terminal devices, the second uplink signal is transmitted by a target terminal device in the plurality of terminal devices, the target terminal device is determined by the first terminal device based on the first measurement result, and the first measurement result includes at least one of the following: a signal strength of the first uplink signal, a time domain resource associated with the first uplink signal, or a frequency domain resource associated with the first uplink signal.

Optionally, the first uplink signal includes a plurality of uplink signals transmitted by the plurality of terminal devices, the target terminal device is a terminal device corresponding to the first measurement result that meets a second preset condition, and the second preset condition includes at least one of the following: a signal strength of an uplink signal, whose signal strength is greater than a second threshold, of the plurality of uplink signals, a frequency domain resource of an uplink signal, whose frequency domain resource is within a bandwidth capable of being detected by the first terminal device, of the plurality of uplink signals, or a time domain resource of an uplink signal, whose time domain resource is greater than a time domain resource required for backscatter communication, of the plurality of uplink signals.

Optionally, the apparatus 1300 further includes a transmitting unit 1320, configured to transmit fourth information to the first terminal device, where the fourth information is used for indicating whether the apparatus successfully receives a backscatter signal transmitted by the first terminal device based on the second uplink signal.

Optionally, the apparatus 1300 further includes a transmitting unit 1320, configured to transmit fifth information to the first terminal device, where the fifth information includes scheduling information of a third uplink signal, and the third uplink signal is transmitted by a target terminal device in the second terminal device. The receiving unit 1310 is further configured to receive the backscatter signal transmitted by the first terminal device, where the backscatter signal is transmitted by the first terminal device based on the third uplink signal.

Optionally, the third uplink signal is transmitted by a terminal device, which is corresponding to a second measurement result that meets a third preset condition, in the target terminal device, and the third preset condition includes at least one of the following: a signal strength of an uplink signal, whose signal strength is greater than a third threshold, in the third uplink signal, a frequency domain resource of an uplink signal, whose frequency domain resource is within a bandwidth capable of being detected by the first terminal device, in the third uplink signal, or a time domain resource of an uplink signal, whose time domain resource is greater than a time domain resource required for backscatter communication, in the third uplink signal.

Optionally, the apparatus 1300 further includes a determining unit 1330, configured to: in a case that the apparatus receives the backscatter signal, determine that an uplink signal in which the backscatter signal is located is transmitted by the terminal device corresponding to the second measurement result that meets the third preset condition; in a case that the apparatus does not receive the backscatter signal, determine that the terminal device corresponding to the second measurement result that meets the third preset condition does not exist in the target terminal device.

Optionally, the first terminal device is a zero-power terminal device.

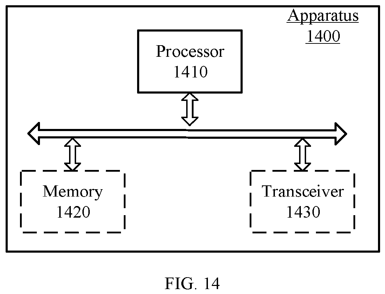

FIG. 14 is a schematic structural diagram of an apparatus according to an embodiment of this application. Dashed lines in FIG. 14 indicate that the unit or module is optional. The apparatus 1400 may be configured to implement the method described in the foregoing method embodiments. The apparatus 1400 may be a chip or a communications apparatus.

The apparatus 1400 may include one or more processors 1410. The processor 1410 may allow the apparatus 1400 to implement a method described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program thereon, where the program may be executed by the processor 1410, to cause the processor 1410 to perform the methods described in the foregoing method embodiments. The memory 1420 may be separate from the processor 1410 or may be integrated into the processor 1410.

The apparatus 1400 may further include a transceiver 1430. The processor 1410 may communicate with another device or chip by using the transceiver 1430. For example, the processor 1410 may perform data transmission or reception with another device or chip by using the transceiver 1430.

An embodiment of this application further provides a computer-readable storage medium for storing a program. The computer-readable storage medium may be applied to a communications apparatus provided in embodiments of this application, and the program causes a computer to execute the methods to be executed by the communications apparatus in various embodiments of this application.

An embodiment of this application further provides a computer program product. The computer program product includes a program. The computer program product may be applied to a communications apparatus provided in embodiments of this application, and the program causes a computer to execute the methods which are executed by the communications apparatus in various embodiments of this application.

An embodiment of this application further provides a computer program. The computer program may be applied to the communications apparatus provided in embodiments of this application, and the computer program causes a computer to execute the methods which are executed by the communications apparatus in various embodiments of this application.

It should be understood that, in embodiments of this application, "B that is corresponding to A" means that B is associated with A, and B may be determined based on A. However, it should also be understood that, determining B based on A does not mean determining B based only on A, but instead B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

In the several embodiments provided in this application, it should be understood that the disclosed system, apparatus, and method may be implemented in another manner. For example, the apparatus embodiments described above are merely examples. For example, the unit division is merely logical function division and there may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may be or may not be physically separate, and components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any available medium readable by the computer, or a data storage device, such as a server or a data center, integrating one or more available media. The available medium may be a magnetic medium (for example, a floppy disk, a hard disk, or a magnetic tape), an optical medium (for example, a digital video disc (digital video disc, DVD)), a semiconductor medium (for example, a solid-state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
measuring, by a first terminal device, a first uplink signal to obtain a first measurement result; and
transmitting, by the first terminal device according to the first measurement result, a backscatter signal to a network device based on a second uplink signal,
wherein the first uplink signal is transmitted by a second terminal device.

2. The method according to claim 1, wherein the measuring, by a first terminal device, a first uplink signal to obtain a first measurement result comprises:
receiving, by the first terminal device, first information transmitted by the network device, wherein the first information comprises scheduling information of the first uplink signal; and
measuring, by the first terminal device, the first uplink signal based on the first information, to obtain the first measurement result.

3. The method according to claim 1 or 2, wherein the first uplink signal is a periodic signal, an aperiodic signal, a semi-static signal, or a dynamic scheduling signal.

4. The method according to any one of claims 1 to 3, wherein the measuring, by a first terminal device, a first uplink signal to obtain a first measurement result comprises:
measuring, by the first terminal device, the first uplink signal in a first time window, to obtain the first measurement result.

5. The method according to any one of claims 1 to 4, wherein before the transmitting, by the first terminal device according to the first measurement result, a backscatter signal to a network device based on a second uplink signal, the method further comprises:
receiving, by the first terminal device, second information transmitted by the network device, wherein the second information comprises scheduling information of the second uplink signal.

6. The method according to any one of claims 1 to 5, wherein the method further comprises:
transmitting, by the first terminal device, the first measurement result to the network device, wherein the first measurement result comprises at least one of following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

7. The method according to claim 6, wherein the second terminal device comprises a plurality of terminal devices, and the first uplink signal comprises a plurality of uplink signals transmitted by the plurality of terminal devices; and
the transmitting, by the first terminal device, the first measurement result to the network device comprises:
transmitting, by the first terminal device to the network device, the first measurement result in which a signal strength meets a first preset condition, wherein the first preset condition comprises at least one of following:
signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, wherein N is a positive integer.

8. The method according to any one of claims 1 to 7, wherein the second terminal device comprises a plurality of terminal devices, and the second uplink signal is transmitted by a target terminal device in the second terminal device; and
before the transmitting, by the first terminal device according to the first measurement result, a backscatter signal to a network device based on a second uplink signal, the method further comprises:
receiving, by the first terminal device, third information transmitted by the network device, wherein the third information is used for indicating the target terminal device.

9. The method according to any one of claims 1 to 5, wherein the second terminal device comprises a plurality of terminal devices, the second uplink signal is transmitted by a target terminal device in the plurality of terminal devices, and the first measurement result comprises at least one of following: a signal strength of the first uplink signal, a time domain resource associated with the first uplink signal, or a frequency domain resource associated with the first uplink signal; and
the transmitting, by the first terminal device according to the first measurement result, a backscatter signal to a network device based on a second uplink signal comprises:
determining, by the first terminal device, the target terminal device based on the first measurement result; and
transmitting, by the first terminal device, the backscatter signal to the network device based on the second uplink signal.

10. The method according to claim 9, wherein the first uplink signal comprises a plurality of uplink signals transmitted by the plurality of terminal devices; and
the determining, by the first terminal device, the target terminal device based on the first measurement result comprises:
determining, by the first terminal device, a terminal device corresponding to the first measurement result that meets a second preset condition as the target terminal device, wherein the second preset condition comprises at least one of following:
a signal strength of an uplink signal, whose signal strength is greater than a second threshold, of the plurality of uplink signals, a frequency domain resource of an uplink signal, whose frequency domain resource is within a bandwidth capable of being detected by the first terminal device, of the plurality of uplink signals, or a time domain resource of an uplink signal, whose time domain resource is greater than a time domain resource required for backscatter communication, of the plurality of uplink signals.

11. The method according to any one of claims 1 to 10, wherein after the transmitting, by the first terminal device according to the first measurement result, a backscatter signal to a network device based on a second uplink signal, the method further comprises:
receiving, by the first terminal device, fourth information transmitted by the network device, wherein the fourth information is used for indicating whether the network device successfully receives the backscatter signal transmitted by the first terminal device based on the second uplink signal.

12. The method according to any one of claims 1 to 11, wherein after the transmitting, by the first terminal device according to the first measurement result, a backscatter signal to a network device based on a second uplink signal, the method further comprises:
receiving, by the first terminal device, fifth information transmitted by the network device, wherein the fifth information comprises scheduling information of a third uplink signal, and the third uplink signal is transmitted by a target terminal device in the second terminal device; and
transmitting, by the first terminal device according to the fifth information, the backscatter signal to the network device based on the third uplink signal.

13. The method according to claim 12, wherein the third uplink signal is transmitted by a terminal device corresponding to a second measurement result that meets a third preset condition in the target terminal device, and after the receiving, by the first terminal device, fifth information transmitted by the network device, the method further comprises:
measuring, by the first terminal device according to the fifth information, the third uplink signal transmitted by the target terminal device, to obtain the second measurement result; and
determining, by the first terminal device from the target terminal device, the terminal device corresponding to the second measurement result that meets the third preset condition, wherein the third preset condition comprises at least one of following:
a signal strength of an uplink signal, whose signal strength is greater than a third threshold, in the third uplink signal, a frequency domain resource of an uplink signal, whose frequency domain resource is within a bandwidth capable of being detected by the first terminal device, in the third uplink signal, or a time domain resource of an uplink signal, whose time domain resource is greater than a time domain resource required for backscatter communication, in the third uplink signal.

14. The method according to claim 13, wherein the transmitting, by the first terminal device according to the fifth information, the backscatter signal to the network device based on the third uplink signal comprises:
in a case that the terminal device corresponding to the second measurement result that meets the third preset condition exists in the target terminal device, transmitting, by the first terminal device, the backscatter signal to the network device based on an uplink signal transmitted by the terminal device corresponding to the second measurement result that meets the third preset condition;
in a case that the terminal device corresponding to the second measurement result that meets the third preset condition does not exist in the target terminal device, skipping, by the first terminal device, transmission of the backscatter signal.

15. The method according to any one of claims 1 to 14, wherein the first terminal device is a zero-power terminal device.

16. A communication method, comprising:
receiving, by a network device, a backscatter signal transmitted by a first terminal device based on a second uplink signal, wherein the backscatter signal is transmitted by the first terminal device according to a first measurement result, and the first measurement result is obtained through performing, by the first terminal device, a measurement of a first uplink signal transmitted by a second terminal device.

17. The method according to claim 16, wherein before the receiving, by a network device, a backscatter signal transmitted by a first terminal device based on a second uplink signal, the method further comprises:
transmitting, by the network device, first information to the first terminal device, wherein the first information comprises scheduling information of the first uplink signal.

18. The method according to claim 16 or 17, wherein the first uplink signal is a periodic signal, an aperiodic signal, a semi-static signal, or a dynamic scheduling signal.

19. The method according to any one of claims 16 to 18, wherein before the receiving, by a network device, a backscatter signal transmitted by a first terminal device based on a second uplink signal, the method further comprises:
transmitting, by the network device, second information to the first terminal device, wherein the second information comprises scheduling information of the second uplink signal.

20. The method according to any one of claims 16 to 19, wherein the method further comprises:
receiving, by the network device, the first measurement result transmitted by the first terminal device, wherein the first measurement result comprises at least one of following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

21. The method according to claim 20, wherein the second terminal device comprises a plurality of terminal devices, and the first uplink signal comprises a plurality of uplink signals transmitted by the plurality of terminal devices; and
the receiving, by the network device, the first measurement result transmitted by the first terminal device comprises:
receiving, by the network device, the first measurement result that is transmitted by the first terminal device and in which a signal strength meets a first preset condition, wherein the first preset condition comprises at least one of following:
signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, wherein N is a positive integer.

22. The method according to any one of claims 16 to 21, wherein the second terminal device comprises a plurality of terminal devices, and the second uplink signal is transmitted by a target terminal device in the second terminal device; and
before the receiving, by a network device, a backscatter signal transmitted by a first terminal device based on a second uplink signal, the method further comprises:
determining, by the network device, the target terminal device based on the first measurement result; and
transmitting, by the network device, third information to the first terminal device, wherein the third information is used for indicating the target terminal device.

23. The method according to any one of claims 16 to 19, wherein the second terminal device comprises a plurality of terminal devices, the second uplink signal is transmitted by a target terminal device in the plurality of terminal devices, the target terminal device is determined by the first terminal device based on the first measurement result, and the first measurement result comprises at least one of following: a signal strength of the first uplink signal, a time domain resource associated with the first uplink signal, or a frequency domain resource associated with the first uplink signal.

24. The method according to claim 23, wherein the first uplink signal comprises a plurality of uplink signals transmitted by the plurality of terminal devices, the target terminal device is a terminal device corresponding to the first measurement result that meets a second preset condition, and the second preset condition comprises at least one of following:
a signal strength of an uplink signal, whose signal strength is greater than a second threshold, of the plurality of uplink signals, a frequency domain resource of an uplink signal, whose frequency domain resource is within a bandwidth capable of being detected by the first terminal device, of the plurality of uplink signals, or a time domain resource of an uplink signal, whose time domain resource is greater than a time domain resource required for backscatter communication, of the plurality of uplink signals.

25. The method according to any one of claims 16 to 24, wherein after the receiving, by a network device, a backscatter signal transmitted by a first terminal device based on a second uplink signal, the method further comprises:
transmitting, by the network device, fourth information to the first terminal device, wherein the fourth information is used for indicating whether the network device successfully receives the backscatter signal transmitted by the first terminal device based on the second uplink signal.

26. The method according to any one of claims 16 to 25, wherein after the receiving, by a network device, a backscatter signal transmitted by a first terminal device based on a second uplink signal, the method further comprises:
transmitting, by the network device, fifth information to the first terminal device, wherein the fifth information comprises scheduling information of a third uplink signal, and the third uplink signal is transmitted by a target terminal device in the second terminal device; and
receiving, by the network device, the backscatter signal transmitted by the first terminal device, wherein the backscatter signal is transmitted by the first terminal device based on the third uplink signal.

27. The method according to claim 26, wherein the third uplink signal is transmitted by a terminal device corresponding to the second measurement result that meets a third preset condition in the target terminal device, and the third preset condition comprises at least one of following:
a signal strength of an uplink signal, whose signal strength is greater than a third threshold, in the third uplink signal, a frequency domain resource of an uplink signal, whose frequency domain resource is within a bandwidth capable of being detected by the first terminal device, in the third uplink signal, or a time domain resource of an uplink signal, whose time domain resource is greater than a time domain resource required for backscatter communication, in the third uplink signal.

28. The method according to claim 27, wherein after the receiving, by the network device, a backscatter signal transmitted by the first terminal device, the method further comprises:
in a case that the network device receives the backscatter signal, determining, by the network device, that an uplink signal in which the backscatter signal is located is transmitted by the terminal device corresponding to the second measurement result that meets the third preset condition;
in a case that the network device does not receive the backscatter signal, determining, by the network device, that the terminal device corresponding to the second measurement result that meets the third preset condition does not exist in the target terminal device.

29. The method according to any one of claims 16 to 28, wherein the first terminal device is a zero-power terminal device.

30. A communications apparatus, comprising:
a measurement unit, configured to measure a first uplink signal to obtain a first measurement result; and
a transmitting unit, configured to transmit, according to the first measurement result, a backscatter signal to a network device based on a second uplink signal,
wherein the first uplink signal is transmitted by a second terminal device.

31. The apparatus according to claim 30, wherein the apparatus further comprises a receiving unit, configured to receive first information transmitted by the network device, wherein the first information comprises scheduling information of the first uplink signal; and the measurement unit is specifically configured to measure the first uplink signal based on the first information, to obtain the first measurement result.

32. The apparatus according to claim 30 or 31, wherein the first uplink signal is a periodic signal, an aperiodic signal, a semi-static signal, or a dynamic scheduling signal.

33. The apparatus according to any one of claims 30 to 32, wherein the measurement unit is specifically configured to measure the first uplink signal in a first time window to obtain the first measurement result.

34. The apparatus according to any one of claims 30 to 33, wherein the apparatus further comprises a receiving unit, configured to receive second information transmitted by the network device, wherein the second information comprises scheduling information of the second uplink signal.

35. The apparatus according to any one of claims 30 to 34, wherein the transmitting unit is further configured to:
transmit the first measurement result to the network device, wherein the first measurement result comprises at least one of following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

36. The apparatus according to claim 35, wherein the second terminal device comprises a plurality of terminal devices, the first uplink signal comprises a plurality of uplink signals transmitted by the plurality of terminal devices, wherein the transmitting unit is specifically configured to transmit, to the network device, the first measurement result in which a signal strength meets a first preset condition, and the first preset condition comprises at least one of following: signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, wherein N is a positive integer.

37. The apparatus according to any one of claims 30 to 36, wherein the second terminal device comprises a plurality of terminal devices, the second uplink signal is transmitted by a target terminal device in the second terminal device, the apparatus further comprises a receiving unit, configured to receive third information transmitted by the network device, and the third information is used for indicating the target terminal device.

38. The apparatus according to any one of claims 30 to 34, wherein the second terminal device comprises a plurality of terminal devices, the second uplink signal is transmitted by a target terminal device in the plurality of terminal devices, and the first measurement result comprises at least one of following: a signal strength of the first uplink signal, a time domain resource associated with the first uplink signal, or a frequency domain resource associated with the first uplink signal; the apparatus further comprises a determining unit, configured to determine the target terminal device; and the transmitting unit is further configured to transmit the backscatter signal to the network device based on the second uplink signal.

39. The apparatus according to claim 38, wherein the first uplink signal comprises a plurality of uplink signals transmitted by the plurality of terminal devices; the determining unit is specifically configured to determine a terminal device corresponding to the first measurement result that meets a second preset condition as the target terminal device, and the second preset condition comprises at least one of following: a signal strength of an uplink signal, whose signal strength is greater than a second threshold, of the plurality of uplink signals, a frequency domain resource of an uplink signal, whose frequency domain resource is within a bandwidth capable of being detected by the apparatus, of the plurality of uplink signals, or a time domain resource of an uplink signal, whose time domain resource is greater than a time domain resource required for backscatter communication, of the plurality of uplink signals.

40. The apparatus according to any one of claims 30 to 39, wherein the apparatus further comprises a receiving unit, configured to receive fourth information transmitted by the network device, wherein the fourth information is used for indicating whether the network device successfully receives the backscatter signal transmitted by the apparatus based on the second uplink signal.

41. The apparatus according to any one of claims 30 to 40, wherein the apparatus further comprises a receiving unit, configured to receive fifth information transmitted by the network device, wherein the fifth information comprises scheduling information of a third uplink signal, and the third uplink signal is transmitted by a target terminal device in the second terminal device; and the transmitting unit is further configured to transmit, according to the fifth information, the backscatter signal to the network device based on the third uplink signal.

42. The apparatus according to claim 41, wherein the third uplink signal is transmitted by a terminal device corresponding to a second measurement result that meets a third preset condition in the target terminal device, the measurement unit is further configured to measure, according to the fifth information, the third uplink signal transmitted by the target terminal device to obtain the second measurement result; and the apparatus further comprises a determining unit, configured to determine the terminal device corresponding to the second measurement result that meets the third preset condition in the target terminal device, wherein the third preset condition comprises at least one of following: a signal strength of an uplink signal, whose signal strength is greater than a third threshold, in the third uplink signal, a frequency domain resource of an uplink signal, whose frequency domain resource is within a bandwidth capable of being detected by the apparatus, in the third uplink signal, or a time domain resource of an uplink signal, whose time domain resource is greater than a time domain resource required for backscatter communication, in the third uplink signal.

43. The apparatus according to claim 42, wherein the transmitting unit is specifically configured to: in a case that the terminal device corresponding to the second measurement result that meets the third preset condition exists in the target terminal device, transmit the backscatter signal to the network device based on an uplink signal transmitted by the terminal device corresponding to the second measurement result that meets the third preset condition; in a case that the terminal device corresponding to the second measurement result that meets the third preset condition does not exist in the target terminal device, skip transmission of the backscatter signal.

44. The apparatus according to any one of claims 30 to 43, wherein the apparatus is a zero-power terminal device.

45. A communications apparatus, comprising:
a receiving unit, configured to receive a backscatter signal transmitted by a first terminal device based on a second uplink signal, wherein the backscatter signal is transmitted by the first terminal device according to a first measurement result, and the first measurement result is obtained through performing, by the first terminal device, a measurement of a first uplink signal transmitted by a second terminal device.

46. The apparatus according to claim 45, wherein the apparatus further comprises a transmitting unit, configured to transmit first information to the first terminal device, wherein the first information comprises scheduling information of the first uplink signal.

47. The apparatus according to claim 45 or 46, wherein the first uplink signal is a periodic signal, an aperiodic signal, a semi-static signal, or a dynamic scheduling signal.

48. The apparatus according to any one of claims 45 to 47, wherein the apparatus further comprises a transmitting unit, configured to transmit second information to the first terminal device, wherein the second information comprises scheduling information of the second uplink signal.

49. The apparatus according to any one of claims 45 to 48, wherein the receiving unit is further configured to:
receive the first measurement result transmitted by the first terminal device, wherein the first measurement result comprises at least one of following: a signal strength of the first uplink signal, a time-frequency resource associated with the first uplink signal, a time domain resource associated with the first uplink signal, a frequency domain resource associated with the first uplink signal, an identity of a terminal device associated with the first uplink signal, or an index of scheduling information associated with the first uplink signal.

50. The apparatus according to claim 49, wherein the second terminal device comprises a plurality of terminal devices, the first uplink signal comprises a plurality of uplink signals transmitted by the plurality of terminal devices, wherein the receiving unit is specifically configured to receive the first measurement result that is transmitted by the first terminal device and in which a signal strength meets a first preset condition, wherein the first preset condition comprises at least one of following: signal strengths of all of uplink signals, whose signal strengths are greater than a first threshold, of the plurality of uplink signals, signal strengths of a part of uplink signals, whose signal strengths are greater than a first threshold, of the plurality of uplink signals, or signal strengths of N uplink signals with the strongest signal strength among the plurality of uplink signals, wherein N is a positive integer.

51. The apparatus according to any one of claims 45 to 50, wherein the second terminal device comprises a plurality of terminal devices, and the second uplink signal is transmitted by a target terminal device in the second terminal device; the apparatus further comprises a determining unit and a transmitting unit, wherein the determining unit is configured to determine the target terminal device based on the first measurement result; and the transmitting unit is configured to transmit third information to the first terminal device, wherein the third information is used for indicating the target terminal device.

52. The apparatus according to any one of claims 45 to 48, wherein the second terminal device comprises a plurality of terminal devices, the second uplink signal is transmitted by a target terminal device in the plurality of terminal devices, the target terminal device is determined by the first terminal device based on the first measurement result, and the first measurement result comprises at least one of following: a signal strength of the first uplink signal, a time domain resource associated with the first uplink signal, or a frequency domain resource associated with the first uplink signal.

53. The apparatus according to claim 52, wherein the first uplink signal comprises a plurality of uplink signals transmitted by the plurality of terminal devices, the target terminal device is a terminal device corresponding to the first measurement result that meets a second preset condition, and the second preset condition comprises at least one of following: a signal strength of an uplink signal, whose signal strength is greater than a second threshold, of the plurality of uplink signals, a frequency domain resource of an uplink signal, whose frequency domain resource is within a bandwidth capable of being detected by the first terminal device, of the plurality of uplink signals, or a time domain resource of an uplink signal, whose time domain resource is greater than a time domain resource required for backscatter communication, of the plurality of uplink signals.

54. The apparatus according to any one of claims 45 to 53, wherein the apparatus further comprises a transmitting unit, configured to transmit fourth information to the first terminal device, wherein the fourth information is used for indicating whether the apparatus successfully receives the backscatter signal transmitted by the first terminal device based on the second uplink signal.

55. The apparatus according to any one of claims 45 to 54, wherein the apparatus further comprises a transmitting unit, configured to transmit fifth information to the first terminal device, wherein the fifth information comprises scheduling information of a third uplink signal, and the third uplink signal is transmitted by a target terminal device in the second terminal device; and
the receiving unit is further configured to receive the backscatter signal transmitted by the first terminal device, wherein the backscatter signal is transmitted by the first terminal device based on the third uplink signal.

56. The apparatus according to claim 55, wherein the third uplink signal is transmitted by a terminal device corresponding to a second measurement result that meets a third preset condition in the target terminal device, and the third preset condition comprises at least one of following: a signal strength of an uplink signal, whose signal strength is greater than a third threshold, in the third uplink signal, a frequency domain resource of an uplink signal, whose frequency domain resource is within a bandwidth capable of being detected by the first terminal device, in the third uplink signal, or a time domain resource of an uplink signal, whose time domain resource is greater than a time domain resource required for backscatter communication, in the third uplink signal.

57. The apparatus according to claim 56, wherein the apparatus further comprises a determining unit, configured to:
in a case that the apparatus receives the backscatter signal, determine that an uplink signal in which the backscatter signal is located is transmitted by the terminal device corresponding to the second measurement result that meets the third preset condition; in a case that the apparatus does not receive the backscatter signal, determine that the terminal device corresponding to the second measurement result that meets the third preset condition does not exist in the target terminal device.

58. The apparatus according to any one of claims 45 to 57, wherein the first terminal device is a zero-power terminal device.

59. A communications apparatus, comprising a memory, a transceiver, and a processor, wherein the memory is configured to store a program, the processor performs data transmission and reception by using the transceiver, and the processor is configured to invoke the program in the memory to execute the method according to any one of claims 1 to 15.

60. A communications apparatus, comprising a memory, a transceiver, and a processor, wherein the memory is configured to store a program, the processor performs data transmission and reception by using the transceiver, and the processor is configured to invoke the program in the memory to execute the method according to any one of claims 16 to 29.

61. A communications apparatus, comprising a processor configured to invoke a program from a memory to execute the method according to any one of claims 1 to 15.

62. A communications apparatus, comprising a processor, configured to invoke a program from a memory to execute the method according to any one of claims 16 to 29.

63. A chip, comprising a processor configured to invoke a program from a memory, to cause a device installed with the chip to execute a method according to any one of claims 1 to 15.

64. A chip, comprising: a processor, configured to invoke a program from a memory to cause a device installed with the chip to perform the method according to any one of claims 16 to 29.

65. A computer-readable storage medium, wherein the computer-readable storage medium stores a program thereon, and the program causes a computer to execute a method according to any one of claims 1 to 15.

66. A computer-readable storage medium, wherein the computer-readable storage medium stores a program thereon, and the program causes a computer to execute a method according to any one of claims 16 to 29.

67. A computer program product, comprising a program, wherein the program causes a computer to execute a method according to any one of claims 1 to 15.

68. A computer program product, comprising a program, wherein the program causes a computer to execute a method according to any one of claims 16 to 29.

69. A computer program, wherein the computer program causes a computer to execute a method according to any one of claims 1 to 15.

70. A computer program, wherein the computer program causes a computer to execute a method according to any one of claims 16 to 29.
